# EUROPÄISCHE PATENTSCHRIFT

(11) **EP 1 771 737 B1**
(45) Veröffentlichungstag und Bekanntmachung des Hinweises auf die Patenterteilung: **13.02.2008**
(21) Anmeldenummer: 05760671.7
(22) Anmeldetag: 26.07.2005
(51) Int. Cl.: G01N 35/02, B01J 19/00

(54) **MEHRFACH-BIOREAKTORVORRICHTUNG**
MULTIPLE BIO-REACTOR DEVICE
SYSTEME DE BIOREACTEURS MULTIPLES

(30) Priorität: 29.07.2004 CH 127304
(43) Veröffentlichungstag der Anmeldung: 11.04.2007
(73) Patentinhaber: Biospectra AG, 8952 Schlieren (CH)
(72) Erfinder: ANDRETTA, Carlo, CH-8142 Uitikon-Waldegg (CH)
(74) Vertreter: Felder, Peter
(86) Internationale Anmeldenummer: PCT/CH2005/000440
(87) Internationale Veröffentlichungsnummer: WO 2006/010286

(56) Entgegenhaltungen:
- FR-A- 2 258 625
- US-A- 3 788 816
- US-A- 4 170 625
- US-A- 5 358 691
- US-B1- 6 299 567

## Beschreibung

### Technisches Gebiet

Die Erfindung betrifft eine Mehrfach-Bioreaktorvorrichtung gemäss dem Oberbegriff des Anspruchs 1.

### Stand der Technik

Bei der Entwicklung und Optimierung von Bioprozessen, die beispielsweise in der pharmazeutischen Industrie, Lebensmitteltechnologie oder in anderen industriellen Bereichen angewandt werden, muss in der Regel eine sorgfältige Abklärung zahlreicher Parameter vorgenommen werden. Insbesondere müssen dabei grosse Anzahlen von Fermentationen unter verschiedenen Reaktions- und Nährmediumbedingungen durchgeführt und gegebenenfalls verschiedene Klone geprüft werden. Ein traditioneller Ansatz hierfür beruhte auf einer systematischen Durchführung einzelner Reaktionsversuche in geeigneten Reaktoren, was jedoch bei der zumeist grossen Zahl erforderlicher Versuche äusserst zeitaufwändig und kostenintensiv ist.

Eine deutliche Beschleunigung und Kostenersparnis gegenüber dem herkömmlichen Ansatz lässt sich mit parallel geführten Versuchsreihen erreichen, was auch unter der Bezeichnung "high throughput bioprocessing" bekannt ist. Entsprechende Vorrichtungen sind in der chemischen Analytik bekannt und umfassen insbesondere Karussellsysteme mit drehbaren Probeträgern und verschiedenen Bedienungsarmen und Messvorrichtungen. Beispiele hierfür sind in der US 3,788,816, FR 2,258,625, US 4,170,625 und US 5,358,691 beschrieben.

Für die parallele Untersuchung und Optimierung von Bioreaktionen unter monoseptischen Bedingungen sind die oben genannten Analytikvorrichtungen allerdings nicht geeignet. Die in der US 3,788,816, FR 2,258,625, US 4,170,625 und US 5,358,691 beschriebenen Vorrichtungen weisen jeweils eine Mehrzahl von Probenbehältern auf, die mit ihrem unteren Bodenteil auf einer unteren Plattform aufliegen und/oder mit ihrem oberen Kragenteil in einem oberen Träger eingehängt sind, wobei die oberen Öffnungen der Behälter frei sind. Damit sind die einzelnen Behälter für verschiedene Bedienungselemente wie Transfer-Pipetten und dergleichen ohne weiteres zugänglich. Zwar ist in der FR 2,258,625 anhand der Fig. 20 eine folienartige Abdeckung für eine Gruppe von Behältern beschrieben, doch handelt es sich dabei lediglich um einen Transport- und Aufbewahrungsschutz. Für die eigentliche Bearbeitung der Behälter muss die Folie abgenommen werden, um damit den Zugang von oben zu ermöglichen. Weiterhin ist in der US 5,358,691 anhand der Fig. 15 eine Kammer mit kontrollierten Luftstrom- und Temperaturbedingungen beschrieben, in welcher sich ein Drehtisch mit einer Mehrzahl von Probenbehältern befindet; ein paralleler Betrieb von mehreren Bioreaktoren unter individuellen monoseptischen Bedingungen lässt sich damit aber nicht bewerkstelligen.

Eine gattungsgemässe Mehrfach-Bioreaktorvorrichtung ist in der US 6,673,532 B2 beschrieben. Die Vorrichtung umfasst eine matrixartige Anordnung mit 96 miniaturisierten Bioreaktoren. Die einzelnen Bioreaktoren sind dabei durch muldenförmige Vertiefungen in einer Trägerplatte ausgebildet, wobei jeder Reaktor ein Volumen von ungefähr 250 µl aufweist. Derartig kleine Reaktionsvolumina erfordern eine entsprechende Miniaturisierung der einzusetzenden Vorrichtungen für die Handhabung und Analytik der Reaktionsmischungen, was letztlich zu einer Beschränkung der möglichen Bearbeitungsschritte zur Folge hat.

Ein bedeutender Nachteil von Mikroreaktoren der obigen Art besteht zudem darin, dass gewisse Aspekte, die bei Bioreaktionen im technischen Massstab wesentlich sind, in einem Mikroreaktor gar nicht zum Tragen kommen und damit auch nicht simulierbar sind. Dazu gehören insbesondere die Auswirkungen des Rührens von Reaktionslösungen einschliesslich der Umwandlung von mechanischer Rührenergie in Wärme, die in einem Mikroreaktor ausser Betracht fallen. Die kleinen Dimensionen eines Mikroreaktors haben aber auch generell zur Folge, dass bedeutende Kenngrössen wie beispielsweise das Verhältnis von Oberfläche zu Volumen sowie verschiedene rheologische Grössen völlig unterschiedlich zu denjenigen in einem Labor- oder gar Produktionsreaktor sind.

### Darstellung der Erfindung

Aufgabe der vorliegenden Erfindung ist es, eine verbesserte Mehrfach-Bioreaktorvorrichtung anzugeben, mit der die Nachteile des Standes der Technik überwunden werden.

Die gestellte Aufgabe wird durch die im Anspruch 1 definierte Vorrichtung gelöst.

Die erfindungsgemässe Vorrichtung weist eine Mehrzahl von Reaktionsgefässen auf und umfasst eine Mehrzahl von Reaktorsegmenten. An jedem Reaktorsegment sind ein Reaktionsgefäss sowie mindestens ein Vorratsgefäss mediumdicht hängend befestigbar, welche zusammen eine Reaktionseinheit bilden. Weiter weist die erfindungsgemässe Vorrichtung eine Mehrzahl von Bearbeitungsstationen auf, mittels welcher vorbestimmte Bearbeitungsschritte an jeder Reaktionseinheit, d.h. an dem Reaktionsgefäss und/oder den Vorratsgefässen eines jeden Reaktorsegmentes durchführbar sind. Zudem sind Bewegungsmittel vorhanden, um ein jedes Reaktorsegment zu einer jeden Bearbeitungsstation zu bringen oder umgekehrt. Jedes Reaktorsegment weist einen sterilisierbaren Bereich auf, der zumindest das Reaktionsgefäss und einen darüber befindlichen Teil des Reaktorsegmentes umfasst.

Die erfindungsgemässe Vorrichtung erlaubt die parallele Durchführung einer Mehrzahl von Bioprozessen. Dabei übernimmt eine jede Reaktionseinheit die Funktion einer einzelnen Bioreaktorvorrichtung, welche ein Reaktionsgefäss sowie ein oder mehrere Vorratsgefässe aufweist. Letztere sind insbesondere für die Aufbewahrung von Nährlösungen sowie für Lauge und Säure zur Einstellung eines gewünschten pH-Wertes im Reaktionsgemisch vorgesehen. Dadurch, dass ein jedes Reaktorsegment zu einer jeden Bearbeitungsstation bringbar ist oder umgekehrt, ist von den verschiedenen Typen von Bearbeitungsstationen jeweils nur eine Einheit erforderlich. Die modulare Bauweise aus einzelnen Reaktorsegmenten ist zudem bei der Suche und Behebung etwaiger Defekte von Vorteil, indem ein defektbefallenes Reaktorsegment durch eine identische Ersatzeinheit ausgetauscht werden kann. Dadurch, dass jedes Reaktorsegment einen sterilisierbaren Bereich aufweist, der zumindest das Reaktionsgefäss und einen darüber befindlichen Teil des Reaktorsegmentes umfasst, kann in jedem Reaktionsgefäss eine Bioreaktion unter individuellen monoseptischen Bedingungen durchgeführt werden. Namentlich lässt sich eine Kreuzkontamination zwischen den einzelnen Reaktionsgefässen vermeiden.

Vorteilhafte Ausgestaltungen der Erfindung sind in den abhängigen Ansprüchen definiert.

Prinzipiell könnten die einzelnen Reaktorsegmente beispielsweise als quadratische oder rechteckförmige Einheiten ausgebildet und in einer oder mehreren Ebenen angeordnet sein. Vorteilhaft ist es jedoch, wenn gemäss Anspruch 2 die einzelnen Reaktorsegmente sektorförmig ausgebildet sind und zusammen einen im Wesentlichen torusförmigen Reaktortisch bilden. Besonders vorteilhaft ist es zudem, wenn gemäss Anspruch 3 die Bearbeitungsstationen sternartig um eine Zentralachse des Reaktortisches angeordnet sind, wobei Reaktorsegmente und Bearbeitungsstationen durch eine Drehbewegung um die Zentralachse zueinander bringbar sind. Es ist zweckmässig aber nicht zwingend, einen um die Zentralachse drehbaren Reaktortisch und nicht drehbare Bearbeitungsstationen vorzusehen. Je nach Funktion der einzelnen Bearbeitungsstationen sind diese in Radialrichtung verschiebbar angeordnet, um an verschiedene Stellen eines Reaktorsegmentes gelangen zu können. Durch die drehbare Ausgestaltung der Mehrfach-Bioreaktorvorrichtung ergibt sich im Vergleich zu den bekannten Vorrichtungen eine wesentlich raumsparendere Konstruktion, was einen Parallelbetrieb im Labormassstab, beispielsweise mit einem Reaktorvolumen von ca. 0.5 L erlaubt.

Der Anspruch 4 definiert bevorzugte Ausgestaltungen der Bearbeitungsstationen, die insbesondere als Reinigungsstation, als Kalibrierungsstation, als Sterilisationsstation, als Befüllungsstation, als Inokulationsstation und als Probenahmestation ausgebildet sein können. Die Reinigungsstation erlaubt es, zu reinigende Komponenten der Reaktorvorrichtung und insbesondere die Reaktionsgefässe mit geeigneten Reinigungsmitteln zu behandeln. Derartige Reinigungsverfahren sind aus der Labortechnik an sich bekannt und werden auch als CIP-Verfahren (engl. "Cleaning In Place") bezeichnet. Die Kalibrierungsstation ist dazu vorgesehen, pH-Sonden und gegebenenfalls weitere Sonden zu kalibrieren. Die Sterilisationsstation dient der Sterilisation von hierfür vorgesehenen Teilen der Bioreaktorvorrichtung, wobei dies vorzugsweise mit überhitztem Wasserdampf erfolgt. Die Befüllungsstation erlaubt es, die einzelnen Gefässe eines Reaktorsegmentes mit vorgefertigten Mediumkomponenten zu befüllen. In analoger Weise dient die Inokulation dem automatisierten Inokulieren der einzelnen Reaktionsgefässe, wobei unterschiedliche Betriebsarten möglich sind. Insbesondere können sämtliche Reaktionsgefässe der Mehrfach-Bioreaktorvorrichtung mit demselben Klon inokuliert werden oder es wird jedes Reaktionsgefäss mit einem anderen Klon inokuliert. Die Probenahmestation dient generell der Analytik der in den Reaktionsgefässen befindlichen Reaktionsmischungen und umfasst insbesondere Messmodule für die Bestimmung von biotechnologisch relevanten Messgrössen, wie optische Dichte, Glucosekonzentration, Enzymaktivitäten usw.

Die Ansprüche 5 bis 10 definieren bevorzugte Ausgestaltungen der Reaktorsegmente. Gemäss Anspruch 5 ist ein jedes Reaktorsegment aus mehreren übereinander angeordneten Segmentschichten gebildet, wobei die einzelnen Segmentschichten mit Fräsungen und/oder Bohrungen und/oder Absperrelementen ausgestattet sind, welche ein Leitungssystem für Flüssigkeiten und/oder Gase bilden. Vorteilhafterweise ist gemäss Anspruch 6 eine Anzahl von unteren Segmentschichten aus rostfreiem Stahl gebildet, wobei diese einen Teil des sterilisierbaren Bereichs bilden. Gemäss Anspruch 7 umfasst das Leitungssystem eine Ringleitung für die Zuführung von Gasen von einer zentralen Einspeisungsstelle zu den einzelnen Reaktorsegmenten. Vorteilhafterweise ist die Ringleitung ebenfalls sterilisierbar. Gemäss Anspruch 8 ist jedes Reaktorsegment mit pneumatisch betätigbaren Ventilen ausgestattet, wobei ein jedes Ventil mit mindestens einem als Ventilsitz wirkenden zugeordneten Auflagebereich einer Segmentschicht zusammenwirkt. Damit lässt sich eine sehr kompakte Bauweise der Gas- und Flüssigkeitsverteilungsmittel erreichen, was sich günstig auf den Platzbedarf der einzelnen Baugruppen auswirkt und letztlich von Vorteil für die Dimensionierung der gesamten Mehrfach-Bioreaktorvorrichtun-g ist. Vorteilhafterweise sind gemäss Anspruch 9 die Ventile innerhalb des Reaktorssegmentes angeordnet, wobei eine Anzahl von oberen Segmentschichten ein Verteilsystem bildet, um Druckluft oder ein anderes Pneumatikmedium zur Steuerung der Ventile zu führen. Beispielsweise umfasst jedes Reaktorsegment drei untere Schichten aus rostfreiem Stahl, welche eine sterilisierbare Zone für die Durchleitung von Flüssigkeiten und/oder Gasen für die jeweiligen Bioreaktionen umfassen, sowie vier obere Schichten aus Aluminium, welche für die Aufnahme und die Bedienung der Ventile sowie für die Verteilung von Steuerluft vorgesehen sind.

Besonders vorteilhaft ist zudem die Ausführungsform nach Anspruch 10, wonach ein jedes Ventil ein Wippglied aufweist, das durch Anbringen beziehungsweise Ablassen eines pneumatischen Druckes in eine erste beziehungsweise zweite Wippstellung bringbar ist, wobei das Wippglied mit mindestens einem Stempelelement verbunden ist derart, dass in einer der beiden Wippstellungen das Stempelelement mit dem zugeordneten Auflagebereich einen mediumdichten Abschluss bildet, und dass in der anderen der beiden Wippstellungen das Stempelelement den mediumdichten Abschluss freigibt. Damit lassen sich namentlich sogenannte 3/2-Wege- bzw. 2/2-Wege-Ventilschaltungen realisieren, was eine grosse Flexibilität bei der konkreten Ausgestaltung des Leitungssystems wie auch beim Betrieb der Mehrfach-Bioreaktorvorrichtung ergibt.

Vorteilhafterweise ist die Bioreaktorvorrichtung gemäss Anspruch 11 mit rohrartigen Wägezellen ausgestattet, wobei eine jede Wägezelle eine mediumdichte Verbindung zwischen dem Reaktorsegment und einem daran angehängten Reaktionsgefäss oder Vorratsgefäss bildet. Dies gestattet eine in regelmässigen oder unregelmässigen Zeitabständen wiederholte oder sogar kontinuierliche Erfassung des Gefässgewichtes. Dies wiederum erlaubt eine einfache und automatisierte Handhabung der Befüllungs- und Dosiervorgänge. Ausserdem kann der Bioprozess gravimetrisch verfolgt und bilanziert werden.

Bei der im Anspruch 12 definierten Weiterbildung ist jedes Reaktorsegment mit mindestens einer sterilisierbaren Kopplungseinheit ausgestattet, mittels welcher eine gegebenenfalls steril haltbaren Verbindung zwischen einem am besagten Reaktorsegment angeordneten Reaktionsgefäss oder Vorratsgefäss und einer darüber angeordneten Bearbeitungsstation herstellbar ist. Somit können die erforderlichen Bearbeitungsschritte, die von den Bearbeitungsstationen an den einzelnen Gefässen durchzuführen sind, erforderlichenfalls unter sterilen Bedingungen vorgenommen werden. Besonders vorteilhaft ist es, wenn die Kopplungseinheit gemäss Anspruch 13 ein Kugelventil beinhaltet, welches in Freigabestellung einen im Wesentlichen vertikalen Durchgangskanal freigibt. Dies erlaubt einen guten Zugang von den Bearbeitungsstationen in die darunter liegenden Gefässe, so dass beispielsweise Bedienungsfinger, Sensoren, Entnahmerohre und dergleichen in die Gefässe abgesenkt werden können.

Bei der Ausgestaltung nach Anspruch 14 ist vorgesehen, dass die Bioreaktorvorrichtung für jedes Reaktionsgefäss eine zugeordnete Rührvorrichtung aufweist. Besonders vorteilhaft ist dabei die im Anspruch 15 definierte Ausführungsform, wonach die Rührvorrichtung ein hängend gelagertes, im Inneren des Reaktionsgefässes angeordnetes Rotorglied mit daran angeordnetem Rührfortsatz sowie ein ausserhalb des Reaktionsgefässes befindliches, toroidales Statorglied aufweist, wobei Rotorglied und Rührfortsatz eine mittige axiale Öffnung aufweisen: Insbesondere in Zusammenwirkung mit der Ausgestaltung nach Anspruch 13 erlaubt dies den ungehinderten Zugang zum zentralen Bereich einer Reaktionsmischung. Ein weiterer Vorteil besteht darin, dass der untere Teil des Reaktionsgefässes nicht durch extern angeordnete Magnetrührer oder dergleichen behindert ist und somit wesentlich besser zugänglich bleibt.

### Kurze Beschreibung der Zeichnungen

Ausführungsbeispiele der Erfindung werden nachfolgend anhand der Zeichnungen näher beschrieben, dabei zeigen:
- Fig. 1: eine Mehrfach-Bioreaktorvorrichtung, in perspektivischer Ansicht;
- Fig. 2: eine vereinfachte Darstellung der Vorrichtung der Fig. 1, in Draufsicht;
- Fig. 3: ein Reaktorsegment einer weiteren Mehrfach-Bioreaktorvorrichtung, teilweise bestückt, in perspektivischer Ansicht;
- Fig. 4: das Reaktorsegment der Fig. 3, in vertikaler zentraler Schnittdarstellung;
- Fig. 5: einen Ausschnitt der Fig. 4, in vergrösserter Darstellung;
- Fig. 6: ein an einer Wägezelle befestigtes Vorratsgefäss, im Längsschnitt;
- Fig. 7: eine Antriebsgruppe einer Rührvorrichtung, im Längsschnitt;
- Fig. 8: ein Pneumatik-Ventil, im Längsschnitt;
- Fig. 9: das Ventil der Fig. 8, in perspektivischer Darstellung, von der unteren Ventilseite her;
- Fig. 10: einen Ausschnitt von vier unteren Sektorplatten im Bereich eines 3/2-Wege-Ventils, im Längsschnitt;
- Fig. 11: einen Teil des Ausschnitts der Fig. 10, in Draufsicht;
- Fig. 12: ein Schaltungssymbol für das 3/2-Wege-Ventil;
- Fig. 13: ein Schaltungssymbol für ein 2/2-Wege-Ventil;
- Fig. 14: eine schematische Rohrleitungs- und Instrumentations- (RI-) Darstellung der in einem Sektor befindlichen Leitungen und Ventile mit Schnittstellen zu externen Leitungen;
- Fig. 15: eine Befüllungsstation ohne Seitenabdeckung, in seitlicher Ansicht;
- Fig. 16: die Befüllungsstation der Fig. 15, in perspektivischer Ansicht:
- Fig. 17: eine schematische RI-Darstellüng der Befüllungsstation der Fig. 15;
- Fig. 18: eine schematische RI-Darstellung einer Reinigungsstation;
- Fig. 19: eine schematische RI-Darstellung einer Kalibrierungsstation;
- Fig. 20: eine schematische RI-Darstellung einer Sterilisationsstation;
- Fig. 21: eine schematische RI-Darstellung einer Inokulationsstation;
- Fig. 22: eine schematische RI-Darstellung einer Probenahmestation.

### Wege zur Ausführung der Erfindung

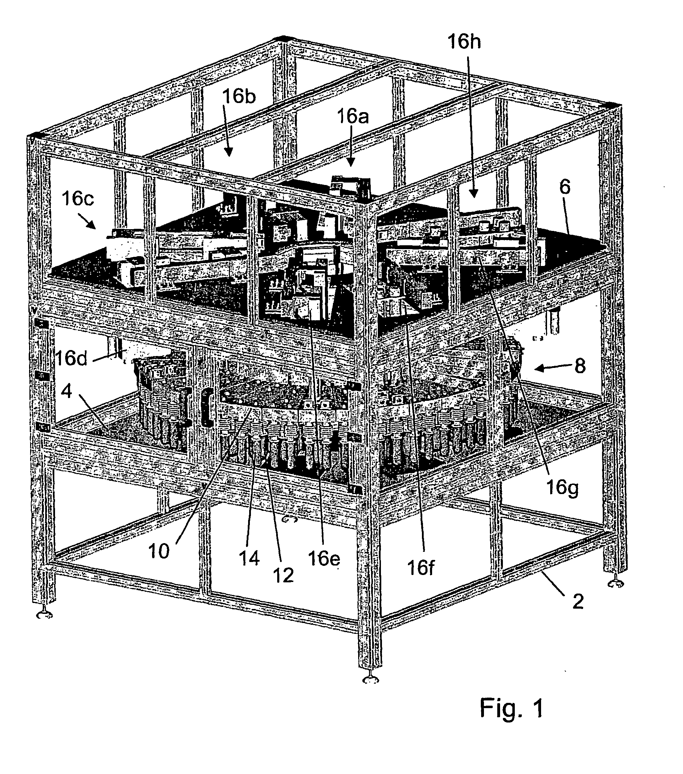

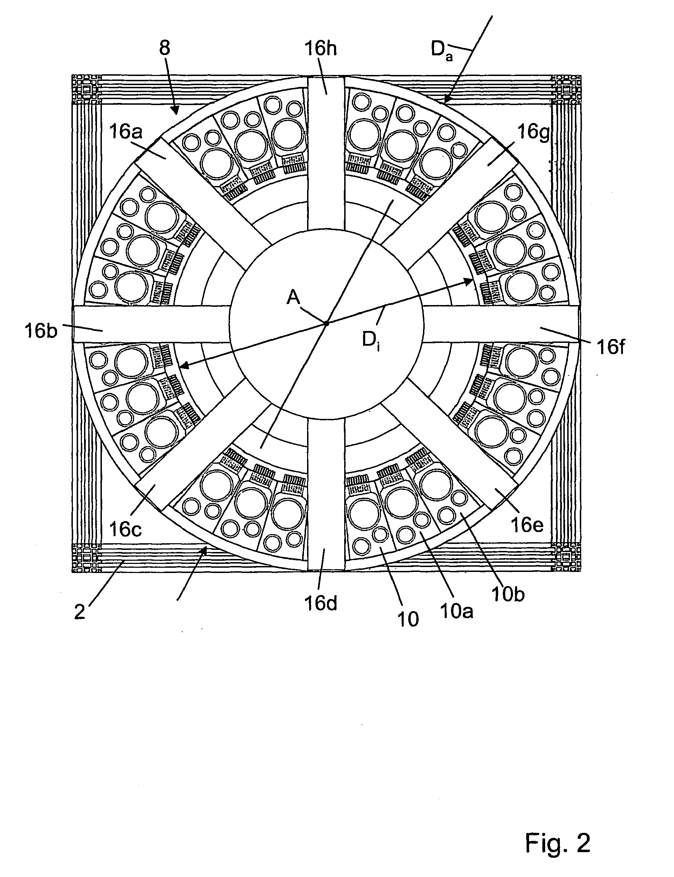

Die in den Fig. 1 und 2 dargestellte Mehrfach-Bioreaktorvorrichtung ist in einem aus Trägerprofilen gebildeten Gestell 2 angeordnet, welches eine untere Plattform 4 sowie eine obere Plattform 6 trägt. Ein im Wesentlichen horizontal angeordneter, torusförmiger Reaktortisch 8 befindet sich zwischen den beiden Plattformen 4 und 6. Der Reaktortisch 8 ist aus 32 identischen, sektorförmigen Reaktorsegmenten 10, 10a, 10b, etc. gebildet, wovon ein jedes Reaktorsegment dazu vorgesehen ist, dass daran ein Reaktionsgefäss 12 sowie zwei Vorratsgefässe 14a, und 14b mediumdicht hängend angebracht werden. Wie insbesondere aus der Fig. 2 ersichtlich ist, ergeben die Segmente 10, 10a, 10b, etc. zusammen den Reaktortisch 8 mit einem kreisringförmigeh Querschnitt, der einen Innendurchmesser Dᵢ und einen Aussendurchmesser Dₐ aufweist. Der Reaktortisch 8 ist mittels nicht näher dargestellter Antriebsmittel, vorzugsweise mittels eines Schrittmotors, um die zentrale Vertikalachse A drehbar und in beliebigen Drehstellungen positionierbar. Im gezeigten Beispiel betragen die ungefähren Abmessungen des Kreisrings Dᵢ = 95 cm und Dₐ = 175 cm; das Gestell 2 hat eine Länge und Breite von ungefähr 200 cm und eine Höhe von ungefähr 240 cm.

Die Bioreaktorvorrichtung umfasst zudem acht Bearbeitungsstationen 16a, 16b, 16c, 16d, 16e, 16f, 16g und 16h, die sternartig um die Drehachse A angeordnet sind. Wie nachfolgend noch näher erläutert wird, befinden sich die einzelnen Bearbeitungsstationen oberhalb der oberen Plattform 6. Im Allgemeinen weist jede Bearbeitungsstation einen unteren Anschluss auf, der durch eine Ausnehmung der oberen Plattform 6 hindurchragt und mit einer zugeordneten oberen Ankopplungsstelle des jeweils unter der Bearbeitungsstation befindlichen Reaktorsegmentes 10, 10a, 10b, etc. zusammenwirkt. Zu diesem Zweck kann jedes der besagten Reaktorsegmente durch Drehen des Reaktortisches 8 um seine Drehachse A zu einer jeden gewünschten Bearbeitungsstation 16a, 16b, etc. gebracht werden, um dort vorbestimmte Bearbeitungsschritte an dem Reaktionsgefäss 12 und/oder den Vorratsgefässen 14a und 14b des jeweiligen Reaktorsegmentes durchzuführen.

Die Bearbeitungsstationen umfassen eine Reinigungsstation 16a, eine Kalibrierungsstation 16b, eine Sterilisationsstation 16c, zwei Befüllungsstationen 16d und 16e, eine Inokulationsstation 16f und zwei Probenahmestationen 16g und 16h. Aufbau und Funktion der einzelnen Bearbeitungsstationen sind weiter unten beschrieben.

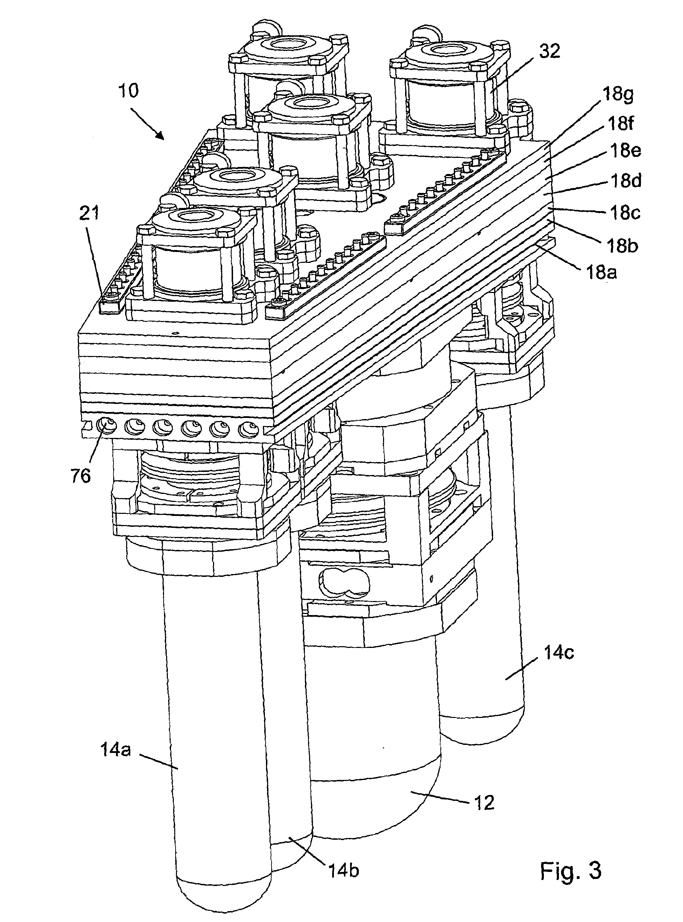

Der prinzipielle Aufbau der einzelnen Reaktörsegmente einer weiteren Mehrfach-Bioreaktorvorrichtung ist anhand der Fig. 3 bis 5 erläutert. Im Unterschied zur Vorrichtung der Fig. 1 und 2 sind die Reaktorsegmente zur Bestückung mit bis zu vier Vorratsgefässen vorgesehen. Am gezeigten Reaktorsegment 10 sind ein Reaktionsgefäss 12 - beispielsweise ein Glasgefäss mit einem Reaktorvolumen von 600 mL bzw. einem Arbeitsvolumen von 200 bis 400 mL - und vier Vorratsgefässe 14a, 14b, 14c und 14d - beispielsweise Glasgefässe mit einem Volumen von je 120 mL - hängend befestigt. Das Reaktorsegment ist aus sieben übereinander geschichteten, sektorförmigen Plattenelementen gebildet, nämlich aus drei unteren Platten 18a, 18b und 18c aus rostfreiem Stahl und vier oberen Platten 18d, 18e, 18f und 18g aus Aluminium. Wie nachfolgend noch eingehend erläutert wird, beherbergt die Schichtstruktur eine Mehrzahl von Ventilen 20 und Kanälen 22, welche zusammen ein System von Gas- und Flüssigkeitsleitungen definieren. Insbesondere beinhaltet die aus den untersten drei Platten 18a, 18b und 18c gebildete Stahlstruktur ein sterilisierbares Leitungssystem, mittels welchem Gase und Flüssigkeiten den einzelnen Gefässen zugeführt bzw. von diesen abgeführt oder entnommen werden können. Die aus den obersten vier Platten 18d, 18e, 18f und 18g gebildete Aluminiumstruktur dient einerseits der Aufnahme der Ventile 20 und beinhaltet andererseits ein nicht-steriles Leitungssystem für die Verteilung von Druckluft zur Betätigung der Pneumatik-Ventile 20. Der Zugang zum Druckluftsystem erfolgt über vier Anschlussgruppen 21, die an den oberen Rändern des Reaktorsegmentes angeordnet sind. Die zugehörige Druckluftversorgung erfolgt über nicht dargestellte Schläuche von einer Ventil-Insel 23 her, die sich auf der von der Zentralachse A abgewandten Stirnseite des Reaktorsegmentes befindet.

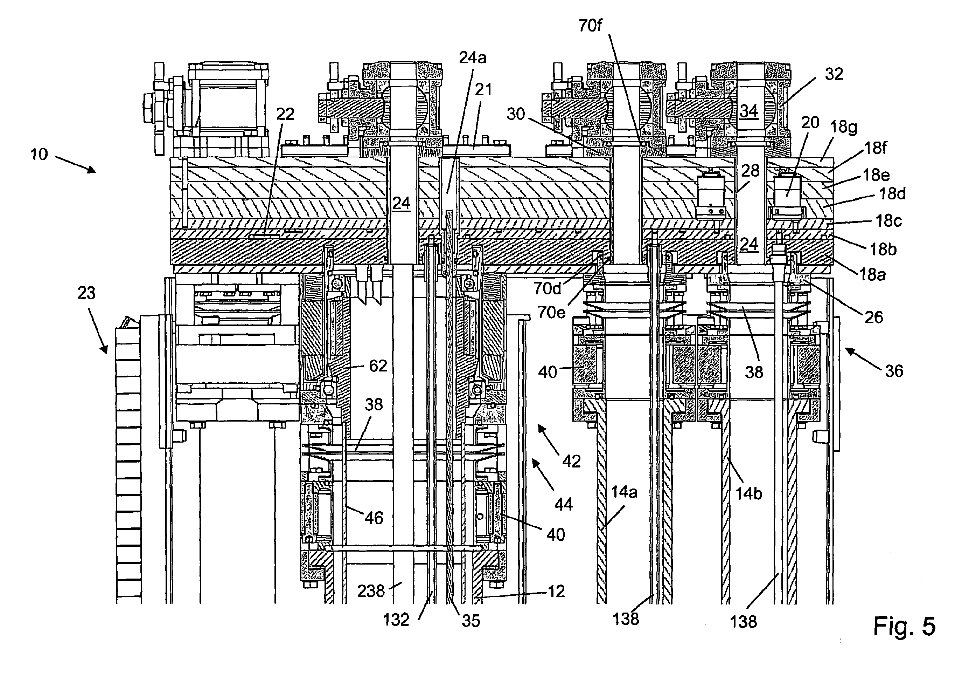

Weiterhin sind im Reaktorsegment 10 vertikale Durchgangsöffnungen 24 ausgebildet, die jeweils am unteren Ende mit einem Anschlussflansch 26 für ein daran anzuhängendes Gefäss ausgestattet sind. Wie insbesondere aus der Fig. 5 erkennbar, ist in jeder Durchgangsöffnung 24 ein vorzugsweise aus rostfreiem Stahl gebildeter Rohrstutzen 28 eingesetzt, dessen oberer Kragenflansch 30 auf der obersten Sektorplatte 18g aufliegt. Der Kragenflansch 30 bildet eine Auflage für ein daran angeflanschtes Absperrorgan 32, welches seinerseits eine obere Ankopplungsstelle für einen hier nicht dargestellten Anschluss einer Bearbeitungsstation bildet. Vorzugsweise ist das Absperrorgan 32 als sterilisierbares Kugelventil ausgestaltet, welches in Durchlassstellung einen Durchgangskanal 34 freigibt. Eine weitere vertikale Durchgangsöffnung 24a dient zur Durchführung einer Temperaturmesssonde 35, beispielsweise eines Pt-100-Sensors, in das Reaktionsgefäss 12.

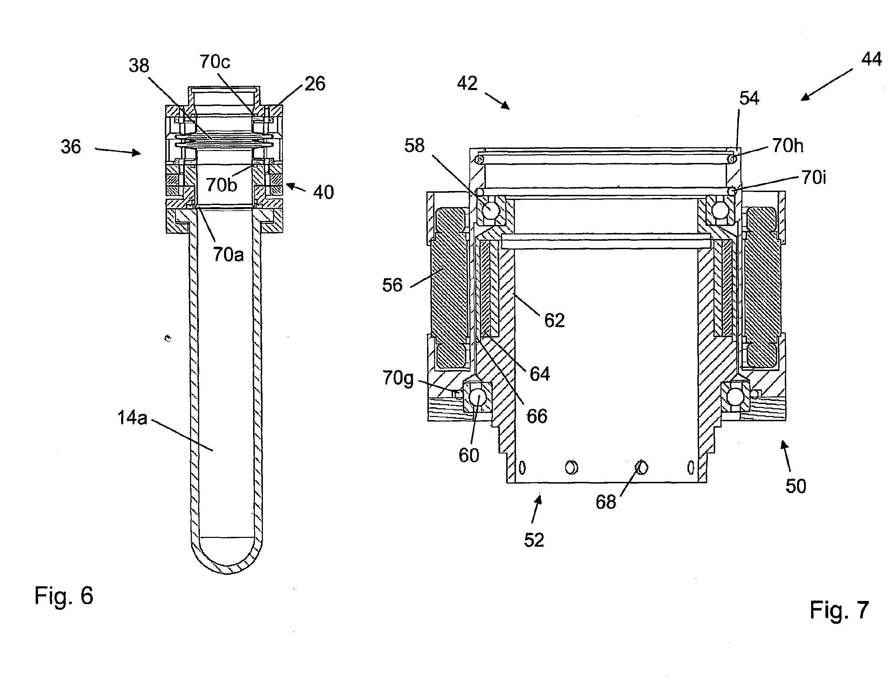

Die Befestigungsweise der Vorratsgefässe ist in der Fig. 6 näher dargestellt. Zwischen dem Anschlussflansch 26 und dem Vorratsgefäss 14a ist eine Wägezelle 36 eingebaut, welche aus einem oberen Faltenbalg 38 und einer darunter hängenden Gewichtsmessdose 40 aufgebaut ist. Der Faltenbalg 38 wirkt als elastisches Glied, dessen Längsauslenkung vom Gewicht der daran hängenden Last - nämlich vom Gewicht der Gewichtsmessdose 40 und des Vorratsgefässes 14a samt etwaigem Inhalt - abhängig ist. Diese Längsauslenkung wird von der Gewichtsmessdose 40 erfasst, welche ein dem besagten Bruttogewicht entsprechendes Messsignal abgibt.

Die Befestigungsweise des Reaktionsgefässes 12 ist analog zu derjenigen der Vorratsgefässe, wenngleich die Bauteile eine grössere Nennweite aufweisen. Allerdings ist die Wägezelle 38 des Reaktionsgefässes 12 nicht direkt am Reaktorsegment 10 befestigt, sondern an der Antriebsgruppe 42 einer Rührvorrichtung 44, die ihrerseits an der Unterseite der untersten Sektorplatte 18a angebracht ist.

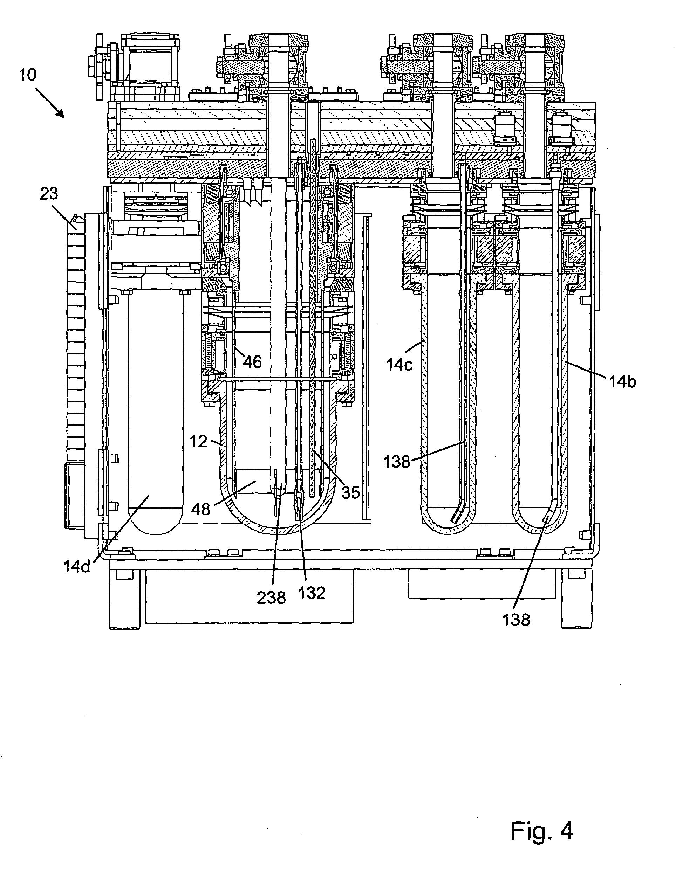

Wie aus den Fig. 4 und 5 hervorgeht, umfasst die Rührvorrichtung 44 eine Antriebgsgruppe 42 sowie einen von diesem angetriebenen, in das Reaktionsgefäss 12 ragenden Rührfortsatz 46, welcher im Wesentlichen die Form eines Rohrsegmentes aufweist. Der Rührfortsatz 46 ragt annähernd bis zum Boden des Reaktionsgefässes 12 und ist in seinem unteren Bereich mit Rührschaufeln 48 versehen.

Der Aufbau der Antriebsgruppe 42 ist in der Fig. 7 dargestellt und umfasst insbesondere ein ausserhalb des Reaktorraums angeordnetes Statorglied 50 sowie ein damit zusammenwirkendes, innerhalb des Reaktorraums angeordnetes Rotorglied 52. Zu diesem Zweck ist ein zylindrisch geformtes Gehäuseteil 54 vorgesehen, das an der Aussenseite von einer Statorwicklung 56 umgeben ist. Innerhalb des Gehäuseteils 54 ist das Rotorglied 52 mittels eines oberen Kugellagers 58 und eines unteren Kugellagers 60 um die Rotorlängsachse drehbar gelagert. Im Einzelnen umfasst das Rotorglied 52 ein zylinderrohrförmiges Halterelement 62, auf dessen äusserer Mantelfläche ein Permanentmagnet 64 angebracht ist, der von einer Aussenschale 66 abgedeckt ist. Des Weiteren ist das Halterelement 62 an seinem unteren Ende mit einer Mehrzahl von Radialbohrungen 68 versehen, die zur Befestigung des Rührfortsatzes 46 vorgesehen sind.

Anhand der Fig. 4 bis 7 ist erkennbar, dass durch Verwendung von mit O-Ringen gedichteten Verbindungen der Innenraum der angeflanschten Gefässe mediumdicht von der Umgebung isoliert gehalten werden kann. Damit ist auch die Voraussetzung gegeben, um den besagten Innenraum steril halten zu können. So ist beispielsweise das Vorratsgefäss 14a über einen ersten Dichtungsring 70a mit der Messdose 40 verbunden, welche über einen zweiten Dichtungsring 70b mit dem Faltenbalg 36 verbunden ist, der seinerseits über einen dritten Dichtungsring 70c mit dem Anschlussflansch 26 verbunden ist. Weiterhin ist der Anschlussflansch 26 über einen vierten Dichtungsring 70d mit der untersten Sektorplatte 18a verbunden. Ein fünfter Dichtungsring 70e umgibt aussenseitig das untere Ende des Rohrstutzens 28, welcher auf seinem oberen Kragenflansch 30 mit einem sechsten Dichtungsring 70f versehen ist, der mit einer unteren Flanschfläche 72 des Absperrorgans 32 zusammenwirkt.

Die Abdichtungsweise des Reaktionsgefässes 12 ist analog zu derjenigen der Vorratsgefässe ausgestaltet, wobei jedoch zusätzliche Dichtungsringe im Bereich der Rührvorrichtung 44 vorgesehen sind. Wie insbesondere aus der Fig. 7 hervorgeht, ist die Antriebsgruppe 42 an einem unteren Kragenflansch 74 des Gehäuseteils 54 mit einem siebten Dichtungsring 70g ausgestattet. Zudem weist das Gehäuseteil 54 an seinem oberen Ende zwei übereinander angeordnete, innenliegende Nuten auf, wovon die obere einen achten Dichtungsring 70h beherbergt. Die untere Nut enthält hingegen einen neunten Ring 70i, der zur Vorspannung des darunter liegenden Kugellagers 58 dient.

Es wird nun näher auf den Aufbau und die Funktion der Reaktorsegmente eingegangen. Jedes Reaktorsegment weist auf seiner zur Zentralachse A gerichteten Stirnseite sechs seitliche Anschlüsse 76 auf, um das im Reaktorsegment ausgebildete Leitungssystem mit drei Belüftungsgasen (insbesondere Sauerstoff, Stickstoff und Kohlendioxid) sowie mit steriler Überdruckluft, überhitztem Wasserdampf und ggf. weiteren Gasen oder Flüssigkeiten zu versorgen, bzw. um Kondensat aus dem Leitungssystem abzuführen. Das besagte Leitungssystem ist in den drei untersten Schichten des Reaktorsegmentes, d.h. in den aus rostfreiem Stahl gebildeten Platten 18a, 18b und 18c ausgebildet. In den darüber liegenden Aluminiumplatten 18d, 18e und 18f sind pneumatisch betätigbare Ventile 20 eingesetzt, deren Ventilglieder mit zugeordneten Ventilsitzen zusammenwirken, die an der Oberseite der obersten Stahlplatte 18c ausgebildet sind. Die mittlere Stahlplatte 18b ist mit Kanalfräsungen versehen, die zusammen mit Vertikalbohrungen in den Stahlplatten 18a bis 18c das später noch näher erläuterte Leitungssystem bilden. Verschiedene Teile des Leitungssystems sind durch Wirkung der Ventile 20 miteinander verbindbar bzw. voneinander abtrennbar.

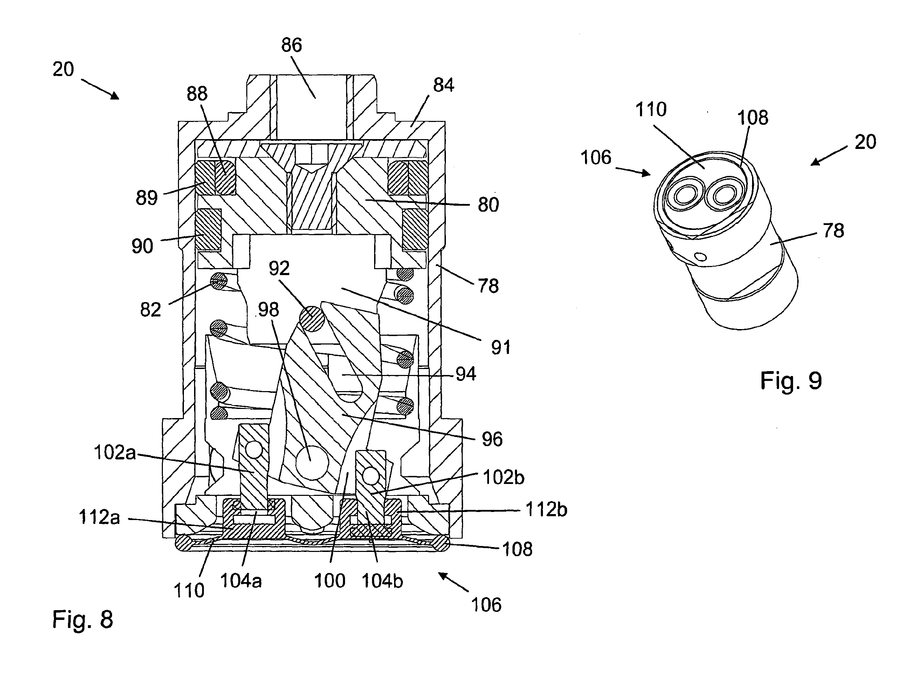

Das in den Fig. 8 und 9 dargestellte Ventil 20 weist einen zylinderförmigen Ventilkörper 78 mit einem darin längsverschieblich gelagerten Kolbenglied 80 auf. Eine im Inneren des Ventilkörpers 78 unterhalb des Kolbenglieds 80 angeordnete Druckfeder 82 spannt das Kolbenglied 80 gegen ein oberes Dachsegment 84 des Ventilkörpers 78 vor. Eine im Dachsegment 84 angeordnete Arbeitsöffnung 86 ist dazu vorgesehen, das Kolbenglied 80 mit pneumatischem Druck zu beaufschlagen und dadurch gegen die Wirkung der Druckfeder 82 nach unten zu drängen. Ein O-Ring 88 mit äusserem Teflon-KSD-Ring 89 sowie ein aus Teflon bestehendes Führungsband 90 befinden sich in äusseren Ringnuten des Kolbenglieds 80 und bewerkstelligen eine Abdichtung gegenüber sowie eine Führung an der Gehäuseinnenwand des Ventilkörpers 78.

Weiterhin ist am unteren Teil des Kolbengliedes 80 ein zapfenförmiger Fortsatz 91 angeordnet, welcher einen radial vorstehenden Mitnehmerstift 92 aufweist, der in eine Folgenut 94 eines Wippgliedes 96 eingreift. Das Wippglied 96 ist über einen Drehstift 98 gegenüber dem Ventilkörper 78 verschwenkbar gelagert und weist einen unteren Querbalken 100 auf. An jedem der beiden seitlichen Enden des Querbalkens 100 ist ein Bolzenglied 102a bzw. 102b angelenkt. Die Bolzenglieder 102a und 102b sind an ihrem unteren Ende als Ventilstempel 104a bzw. 104b ausgestaltet.

Wie aus der Fig. 8 ersichtlich, weist das Ventil 20 zudem ein unteres Dichtungselement 106 auf. Letzteres ist aus einem für Dichtungszwecke geeigneten gummielastischen Material geformt und umfasst einen äusseren Ringwulst 108, der eine Membran 110 umgibt. Die Membran 110 ist mit zwei nach oben gerichteten Haltezapfen 112a und 112b versehen, wovon jeder eine obere Öffnung zur Aufnahme eines zugeordneten Ventilstempels 104a bzw. 104b aufweist. Das Dichtungselement 106 bildet eine Grenze zwischen einem sterilisierbaren unteren Bereich und einem unsterilen oberen Bereich des Reaktorsegmentes.

Wird nun das Ventil 20 über eine pneumatische Anschlussleitung durch die Arbeitsöffnung 86 mit pneumatischem Druck beaufschlagt, so verschiebt sich das Kolbenglied 80 von einer oberen Kolbenposition gegen die Vorspannkraft der Druckfeder 82 in eine untere Kolbenposition. Dabei wird auch der Mitnehmerstift 92 nach unten verschoben, wobei durch Zusammenwirkung mit der Folgenut 94 das Wippglied 96 um seine durch den Drehstift 98 gebildete Schwenkachse verschwenkt wird. Dabei wird die linke Seite des Querbalkens 100 nach unten und gleichzeitig die rechte Seite des Querbalkens 100 nach oben gedrängt und demnach der linke Ventilstempel 104a nach unten und der rechte Ventilstempel 104b nach oben gedrängt.

Wird der pneumatische Druck über die pneumatische Anschlussleitung wieder abgelassen, so verschiebt sich das Kolbenglied 80 aufgrund der Vorspannkraft der Feder 82 wieder in seine obere Kolbenposition wie sie in der Fig. 8 dargestellt ist. Dabei wird das Wippglied 96 wiederum infolge der Zusammenwirkung von Mitnehmerstift 92 und Folgenut 94 verschwenkt, wobei nun der rechte Ventilstempel 104b niedergedrückt und der linke Ventilstempel 104a angehoben wird.

Wie bereits ausgeführt, sind die Ventilstempel 104a und 104b mit dem unteren Dichtungselement 106 über die Haltezapfen 112a bzw. 112b formschlüssig verbunden, sodass im Bereich der Ventilstempel befindliche Teile der Membran 110 angehoben bzw. niedergedrückt werden. Demnach kann mit dem jeweils niedergedrückten Teil des Dichtungselementes 106 ein mediumdichter Abschluss gegenüber einem zugeordneten Ventilsitz bewerkstelligt werden; umgekehrt kann durch Anheben eines Teils des Dichtungselementes 106 ein zuvor gesperrter Mediumdurchgang freigegeben werden. Gleichzeitig bildet die Membran 110 in jeglichen Stellungen des Wippgliedes 96 einen mediumdichten Abschluss des Ventils 20, d.h. der Ventilinnenraum kommt nicht in Kontakt mit dem durch das Ventil kontrollierten Medium.

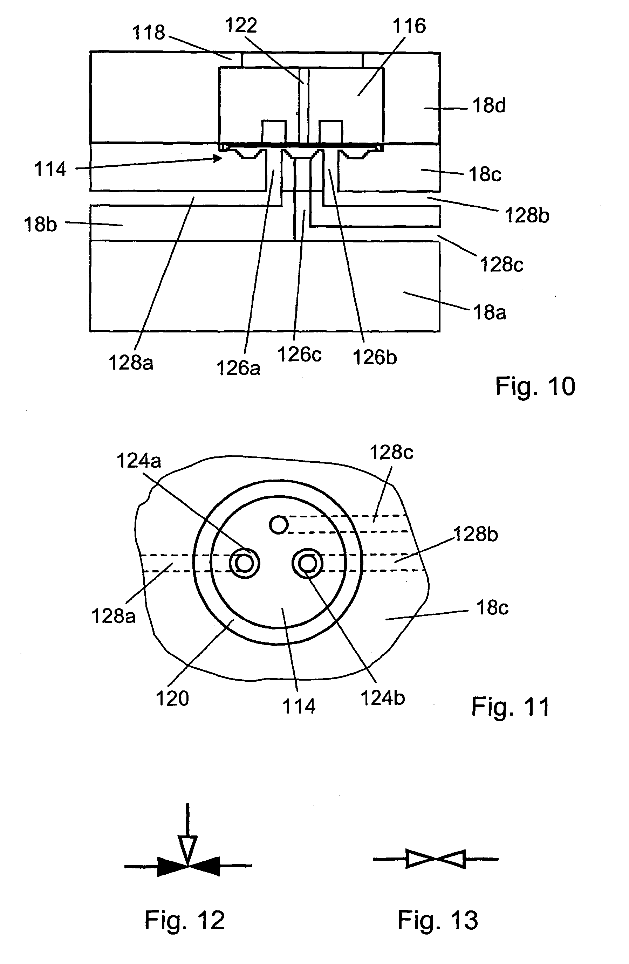

Die Anwendung des oben beschriebenen Ventils für eine 3/2-Wegeschaltung wird nun anhand der Fig. 10 und 11 näher erläutert.

Die Fig. 10 zeigt einen Vertikalschnitt durch die untersten vier Schichten eines Reaktorsegmentes 10, d.h. durch die drei Stahlplatten 18a, 18b, 18c sowie durch die unterste Aluminiumplatte 18d. An der Oberseite der obersten Stahlplatte 18c ist eine kreisförmige Einfräsung 114 angebracht, in welche der Unterteil eines nur teilweise abgebildeten Ventils 20 einsetzbar ist. Die darüber liegende unterste Aluminiumplatte 18d weist eine Aufnahmebohrung 116 mit einer oberen Schulter 118 auf, die den Unterteil des Ventils 20 übergreift. Die Abmessungen sind dabei so gewählt, dass durch Zusammenbringen der untersten Aluminiumplatte 18d mit der obersten Stahlplatte 18c der Ringwulst 108 des Dichtungselements 106 des Ventils 20 gegen eine randständige Flanschfläche 120 der Einfräsung 114 angedrückt wird. Damit bildet der Ringwulst 108 einen mediumdichten Abschluss im Randbereich der Einfräsung 114.

Bei eingesetztem Ventil ragt dessen hier nicht dargestelltes Oberteil aus der Aluminiumplatte 18d nach oben und erstreckt sich in die darüber liegenden Aluminiumschichten 18e und 18f, welche die für den Betrieb des Ventils erforderliche pneumatische Anschlussleitung beherbergen.

Die Wandung der Aufnahmebohrung 116 kann überdies eine Führungsnut 122 aufweisen, in welche beispielsweise der Drehstift 98 des Wippgliedes 96 eingreifen kann. Dadurch ist eine genaue Ausrichtung der Ventilstempel 104a bzw. 104b bezüglich der zugeordneten Ventilsitze 124a bzw. 124b erreichbar, welche an der Oberseite der oberen Stahlplatte 18c ausgebildet sind.

Der linke Ventilsitz 124a umgibt die obere Mündung einer ersten vertikalen Durchgangsbohrung 126a der oberen Stahlplatte 18c, welche in eine erste horizontale Fräsung 128a an der Oberseite der mittleren Stahlplatte 18b führt. Der rechte Ventilsitz 124b umgibt die obere Mündung einer zweiten vertikalen Durchgangsbohrung 126b der oberen Stahlplatte 18c, welche in eine zweite horizontale Fräsung 128b an der Oberseite der mittleren Stahlplatte 18b führt. Des Weiteren befindet sich im Zentralbereich der Einfräsung 114 eine durch die obere Stahlplatte 18a und die mittlere Stahlplatte 18b gehende dritte Vertikalbohrung 126c, welche in eine dritte horizontale Fräsung 128c an der Unterseite der mittleren Stahlplatte 18b führt.

Wie noch näher beschrieben wird, sind die drei Stahlplatten 18a, 18b und 18c miteinander verlötet, wobei jedoch die kreisförmige Einfräsung 114 wie auch die kanalartigen Längsfräsungen 128a, 128b und 128c freigelassen, d.h. nicht von Lot bedeckt sind. Demnach bilden die zwischen den miteinander verlöteten Schichten angeordneten Fräsungen ein mediumdichtes Kanalsystem.

Die Funktionsweise der 3/2-Wege-Schaltung wird nun durch zusätzliche Bezugnahme auf die Fig. 8 erläutert. In der Ruhestellung des Pneumatikventils 20, d.h. bei nicht angelegtem Pneumatikdruck, ist der rechte Ventilstempel 104b niedergedrückt, sodass der rechte Ventilsitz 124b bzw. die obere Mündung der zweiten vertikalen Durchgangsbohrung 126b mediumdicht abgeschlossen ist. Gleichzeitig ist der linke Ventilstempel 104a angehoben und somit der linke Ventilsitz 124a bzw. die obere Mündung der ersten vertikalen Durchgangsbohrung 126a freigegeben. Somit besteht in der Ruhestellung des Ventils eine Verbindung zwischen den durch die erste horizontale Fräsung 128a und der dritten horizontalen Fräsung 128c definierten Kanälen. Demgegenüber ist bei druckbeaufschlagtem Pneumatikventil der linke Ventilstempel 104a niedergedrückt. Somit ist der linke Ventilsitz 124a bzw. die obere Mündung der ersten vertikalen Durchgangsbohrung 126a mediumdicht abgeschlossen und gleichzeitig der rechte Ventilsitz 124b bzw. die obere Mündung der zweiten vertikalen Durchgangsbohrung 126b freigegeben. Demnach besteht in der druckbeaufschlagten Stellung des Ventils eine Verbindung zwischen den durch die zweite horizontale Fräsung 128b und der dritten horizontalen Fräsung 128c definierten Kanälen. Die hier beschriebene 3/2-Wege-Schaltung erlaubt somit, die dritte Leitung 128c wahlweise ausschliesslich mit der ersten Leitung 128a oder mit der zweiten Leitung 128b zu verbinden. Das entsprechende Schaltungssymbol ist in der Fig. 12 angegeben.

Das anhand der Fig. 10 und 11 erläuterte Funktionsprinzip lässt sich analog zur Bildung einer 2/2-Wege-Schaltung umsetzen. Zu diesem Zweck kann beispielsweise die erste Leitung 128a weggelassen werden, womit der linke Ventilsitz 124a unwirksam bleibt bzw. durch einen oberen Flächenabschnitt der oberen Stahlplatte 108c ersetzt werden kann. Demnach ist die Verbindung zwischen der dritten Leitung 124c und der zweiten Leitung 124b in der Ruhestellung des Pneumatikventils 20 verschlossen und kann durch pneumatische Beaufschlagung des Ventils 20 freigegeben werden. Das entsprechende Schaltungssymbol in der Fig. 13 angegeben.

Bei Bedarf kann die 2/2-Wege-Schaltung auch dahingehend abgewandelt werden, dass die geschaltete Verbindung in der Ruhestellung des Pneumatikventils 20 freigegeben ist und bei pneumatischer Beaufschlagung des Ventils verschlossen wird. Zu diesem Zweck ist das Ventil in einer bezüglich seiner Längsachse um 180° gedrehten Stellung einzubauen, so dass sich nunmehr der ehemals als linker Ventilstempel 104a bezeichnete Ventilteil über dem einzigen Ventilsitz 124b der 2/2-Wege-Schaltung befindet.

Wie bereits erwähnt, sind die drei untersten, aus rostfreiem Stahl gefertigten Schichten eines jeden Reaktorsegmentes mit Bohrungen und Fräsungen ausgestattet, welche zusammen mit Ventilen der zuvor beschriebenen Art ein sterilisierbares Leitungssystem bilden. Die Stahlschichten sind miteinander verlötet, wobei vorzugsweise das folgende Hartlötverfahren zur Anwendung kommt.

In einem ersten Arbeitsschritt werden die bereits mit sämtlichen erforderlichen Bohrungen und Fräsungen versehenen Stahlplatten lösungsgeglüht. Um eine Planarität der Sektorschichten von besser als 0.05 mm zu gewährleisten, werden diese anschliessend geläppt. Eine derartige Planarität der Stahlschichten ist für das Verlöten der Sektorschichten mit einer dünnen Lötfolie zwingend, da sonst keine dauerhafte und mediumdichte Verbindung der Sektorschichten erreicht werden kann. In einem zweiten Arbeitsschritt wird eine Lötfolie, die mit Ausschnitten bzw. Ausnehmungen für die von Lot freizuhaltenden Fräsungen und Bohrungen versehen ist, zwischen die zu verlötenden Sektorschichten eingelegt. Vorteilhafterweise wird eine Lötfolie aus Nickel oder Gold mit einer Dicke von ungefähr 0.05 mm verwendet. In einem dritten Arbeitsschritt werden die derart zusammengefügten Sektorschichten in einem Vakuumofen auf eine Temperatur von rund 1050°C erhitzt, wobei die Sektorschichten miteinander verlötet werden.

Unterhalb der verlöteten Stahlschichten ist vorteilhafterweise eine nicht abgebildete Heizfolie angebracht, welche die Sterilisation des Leitungssystems unterstützt. Zu diesem Zweck wird die Heizfolie auf mindestens 121°C erhitzt, um dadurch die im Reaktorsegment befindlichen Kanäle, Bohrungen und Ventilsitze zu sterilisieren. Die Schnittstelle zwischen sterilem und nicht sterilem Sektorbereich verläuft demgemäss entlang der Grenze zwischen der obersten Stahlschicht 18c und der unteren Aluminiumschicht 18d, wobei die Ventilsitze sowie die den Ventilsitzen zugewandten Membranseiten der Ventile dem sterilisierbaren Sektorbereich zugehören.

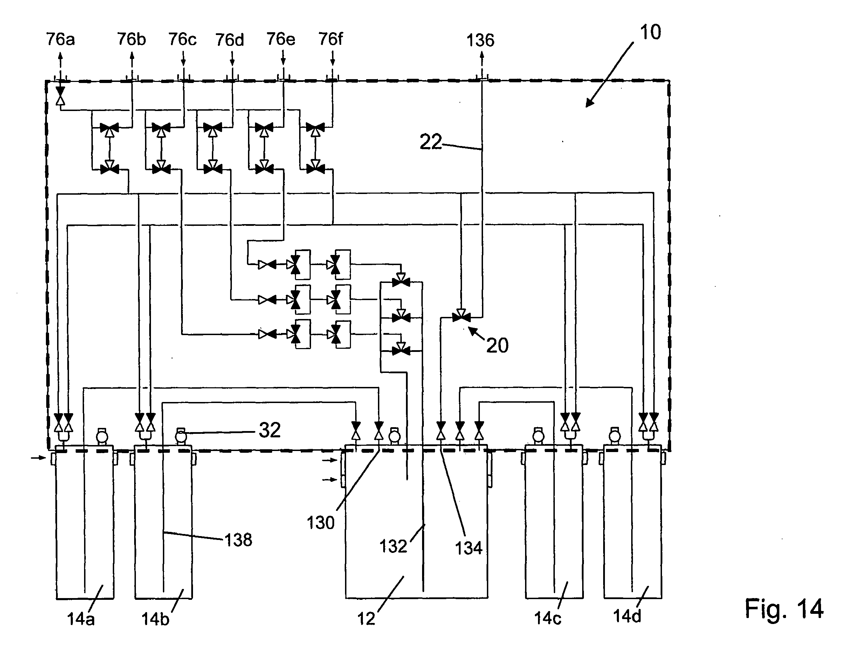

Wie aus der Fig. 4 und dem entsprechenden Rohrleitungs- und Instrumentationsschema (RI-Schema) der Fig. 14 ersichtlich, ist das Reaktionsgefäss 12 mit Zufuhrrohren 130 sowie mit einem Belüftungsrohr 132 ausgestattet, die mit Kanälen bzw. Bohrungen des Leitungssystems im zugehörigen Reaktorsegment verbunden sind und der Zufuhr von Gas oder Flüssigkeiten dienen. Die Zufuhrrohre 130 enden in einem oberhalb des Flüssigkeits- bzw. Mediumspiegels liegenden Bereich des Gefässes und weisen vorteilhafterweise ein angeschrägtes unteres Ende auf, wodurch das Abfliess- bzw. Abtropfverhalten der zugeführten Flüssigkeiten verbessert wird. Das Belüftungsrohr 132 reicht im Wesentlichen bis zum Boden des Reaktionsgefässes 12. Abluft aus dem Reaktionsgefäss 12 kann über eine Entnahmeöffnung 134 weggeführt und bei Bedarf über ein 3/2-Wege-Ventil zu einer oberen Entnahmestelle 136 (in der Fig. 4 nicht sichtbar) geleitet werden, welche insbesondere zur Verbindung an eine nicht dargestellte Abgas-Analytikstation vorgesehen ist.

Bei den Vorratsgefässen 14a bis 14d sind im gezeigten Beispiel keine eigentlichen Zufuhrrohre vorgesehen, sondern die Zufuhr von Gas oder Flüssigkeiten erfolgt über eine mit dem Leitungssystem des Reaktorsegmentes verbundene Durchgangsbohrung in der untersten Stahlplatte 18a. Des Weiteren sind die Vorratsgefässe 14a bis 14d mit je einem Steigrohr 138 ausgestattet, mittels welchem die im Gefäss vorliegende Flüssigkeit entnommen werden kann. Zu diesem Zweck reichen die Steigrohre 138 im Wesentlichen bis zum Boden des zugehörigen Vorratsgefässes. Zur Entnahme von Flüssigkeit wird der Gefässinnenraum über die obere Zufuhrstelle mit Überdruck beaufschlagt, wodurch die im Gefäss vorliegende Flüssigkeit in das Steigrohr 138 gedrängt und damit aus dem Gefäss befördert wird.

Der schematische Aufbau des in jedem Reaktorsegment befindlichen sterilisierbaren Leitungssystems ist in der Fig. 14 dargestellt. Das schraffierte Rechteck stellt dabei das aus Platten gebildete Schichtsystem des betreffenden Reaktorsegmentes dar, d.h. die innerhalb des Rechtecks gezeichneten Komponenten sind konstruktionsmässig im jeweiligen Schichtsystem integriert.

Das gezeigte Reaktorsegment 10 weist sieben Anschlussstellen auf, nämlich die sechs in der Fig. 3 gezeigten seitlichen Anschlüsse 76, welche sich an der zur Zentralachse A gerichteten Stirnseite des Segmentes befinden, sowie die an der Oberseite des Reaktorsegmentes befindliche obere Entnahmestelle 136. Zum besseren Verständnis sind die seitlichen Anschlüsse im Folgenden mit eigenen Bezugszeichen 76a bis 76f gekennzeichnet. Ebenfalls in der Fig. 14 dargestellt ist ein Reaktionsgefäss 12 und vier Vorratsgefässe 14a bis 14d sowie die zuvor beschriebenen Komponenten wie Zufuhrrohr 130, Belüftungsrohr 132, Entnahmerohr 134 und Steigrohr 136 wie auch die oberen Absperrorgane 32.

Das Leitungssystem der Fig. 14 umfasst eine Anzahl von Kanälen, die durch horizontale Fräsungen und Vertikalbohrungen in der Stahlschicht des Reaktorsegmentes gebildet sind. Ausserdem umfasst das Leitungssystem als Weichenglieder wirkende 3/2-Wegeventile sowie als Absperrglieder wirkende 2/2-Wegeventile, die mit den in den Fig. 12 und 13 angegebenen Schaltungssymbolen dargestellt sind. Durch geeignetes Stellen der besagten Weichen- und Absperrglieder kann eine ganze Reihe der für den Betrieb der Mehrfach-Bioreaktorvorrichtung erforderlichen Operationen vorgenommen werden.

Bei der Sterilisation eines Reaktorsegmentes werden die Anschlüsse 76b bis 76f mit Heissdampf versorgt, während Anschluss 76a für die Wegführung von Kondensat verwendet wird. Bei den weiteren Operationen werden die Anschlüsse 76a, 76c, 76d, 76e und 76f für die Zufuhr von Gasen (z.B. Kohlendioxid (CO₂), Stickstoffgas (N₂), Luft/Sauerstoff, sterile Druckluft) verwendet, während Anschluss 76b der Wegführung von Abluft dient. Die Versorgung der einzelnen Anschlüsse erfolgt über eine im achsennahen Bereich der Bioreaktorvorrichtung angeordnete sterilisierbare Ringleitung. Die Ringleitung umfasst eine Mehrzahl von flexiblen Leitungsschläuchen, die mit Abzweigungen für die einzelnen Reaktorsegmenten versehen sind. Die Leitungsschläuche sind so ausgelegt, dass der Reaktortisch ungehindert zumindest eine volle Umdrehung vollziehen kann.

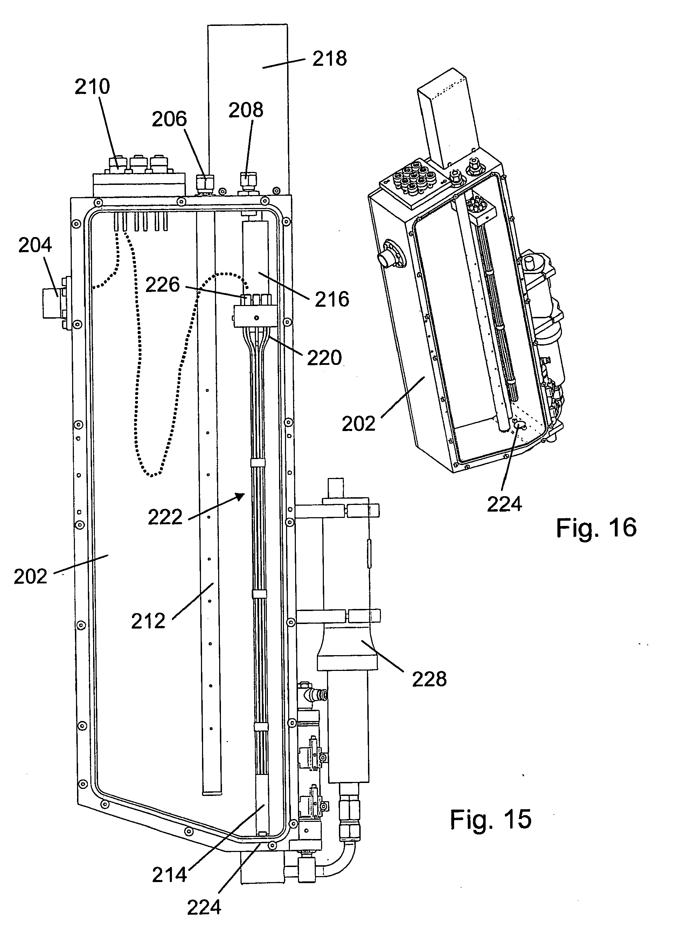

Der Aufbau der Befüllungsstation 16d (bzw. 16e) ist in den Fig. 15 und 16 dargestellt. Diese weist ein aus rostfreiem Stahl gefertigtes Gehäuse 202, das im oberen Teil eine seitliche Mehrfachdurchführung 204 für ein nicht dargestelltes Schlauchbündel aufweist und an der Oberseite noch zwei Einzeldurchführungen 206 und 208 besitzt. Ebenfalls an der Oberseite des Gehäuses 202 befindet sich eine Gruppe von neun Dosierventilen 210. Die erste Einzeldurchführung 206 führt in ein Längsrohr 212, das sich bis in die Nähe des Gehäusebodens erstreckt. Das Längsrohr 212 ist mit seitlichen Öffnungen versehen und dient der Zufuhr von Heissdampf anlässlich der Sterilisation der Befüllungsstation.

Des Weiteren enthält die Befüllungsstation einen mit einer Spindel 214 vertikal verschiebbaren Schlitten 216, der mittels eines Schrittmotors 218 zwischen der hier dargestellten oberen Stellung und einer unteren Stellung hin und her bewegbar ist. Der Schlitten 216 trägt eine Gruppe von Abtropfröhrchen 220, die zu einem Bündel 222 zusammengefasst sind. Eine Öffnung 224 im Gehäuseboden bildet einen Durchgang für das Röhrchenbündel 222 wenn dieses mit dem Schlitten 216 abgesenkt wird. Im betriebsbereiten Zustand der Befüllungsstation 16d ist diese mit Verbindungsröhrchen, die von der seitlichen Durchführung 204 zu den Dosierventilen 210 und von dort zu einer Gruppe von Anschlussteilen 226 führt, welche in die einzelnen Abtropfröhrchen 220 münden. In Anbetracht der vom Schlitten 216 vollführten Auf- und Abbewegung müssen die Verbindungsröhrchen flexibel sein und eine ausreichende Länge haben. Ein solches Verbindungsröhrchen ist in der Fig. 15 gepunktet dargestellt.

Ein mit Druckluft versorgtes Heizgerät 228 führt bei Bedarf heisse Luft in die Region unmittelbar unterhalb der Bodenöffnung 224. Schliesslich ist noch eine hier nicht dargestellte Seitenabdeckung vorgesehen, welche einen seitlichen Abschluss für das Gehäuse 202 bildet.

Beim Befüllen eines Reaktionsgefässes 12 wird zunächst das entsprechende Reaktorsegment unter die Befüllungsstation 16d gebracht bis das oberhalb des Reaktionsgefässes befindliche Absperrorgan 32 genau unterhalb der Bodenöffnung 224 steht. Der zwischen dem Boden des Gehäuses 202 und dem Absperrorgan 32 verbleibende Luftspalt wird mit heisser Luft angeblasen, wodurch auch in diesem Kopplungsbereich sterile Verhältnisse erzeugt werden. Anschliessend wird das Absperrorgan 32 geöffnet und das Röhrchenbündel 222 durch Betätigung des Schrittmotors 216 in das Reaktionsgefäss 12 abgesenkt, woraufhin die Befüllung erfolgen kann. Schliesslich wird das Röhrchenbündel 222 wieder hochgefahren und das Absperrorgan 32 verschlossen.

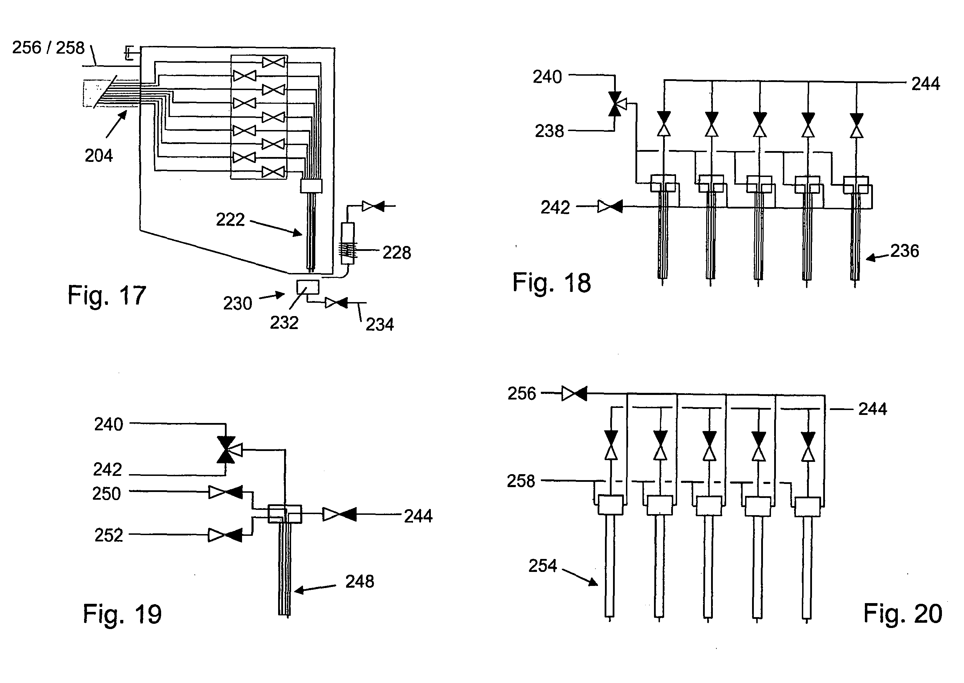

Das Funktionsprinzip der Befüllungsstation 16d ist in der schematischen Darstellung der Fig. 17 unter Verwendung korrespondierender Bezugszeichen zusammengefasst. Zusätzlich ist in der Fig. 17 eine bisher nicht erwähnte Parkstation 230 gezeigt, welche einen Aufnahmebecher 232 und eine Abflussleitung 234 umfasst. Die Parkstation 230 befindet sich in Radialrichtung ausserhalb des Reaktortisches 8 und wird durch eine Radialverschiebung der Befüllungsstation 16d erreicht. Die Parkstation 230 kommt zum Einsatz, wenn anfänglich die Befüllungsstation 16d über das Längsrohr 212 mit Heissdampf beaufschlagt wird, und dient zur Aufnahme des aus der unteren Öffnung 224 auslaufenden Kondensats.

Das Funktionsprinzip der verschiedenen Bearbeitungsstationen wird nun anhand der Fig. 17 bis 22 erläutert. Die konstruktive Ausgestaltung dieser Bearbeitungsstationen ist analog zu derjenigen der Befüllungsstation, d.h. übereinstimmende Funktionen (z.B. Auf- und Abfahren eines Bedienungsfingers) werden mit denselben oder äquivalenten Mitteln gelöst (z.B. mit Schrittmotor oder pneumatischer Lineareinheit angetriebener Schlitten).

Die in der Fig. 18 dargestellte Reinigungsstation 16a dient der Reinigung der einzelnen Reaktorsegmente durch Anwendung der bekannten CIP-Methode. Die Reinigungsstation 16a weist fünf auf- und abfahrbare Reinigungsfinger 236 auf, wovon ein jeder in ein zugeordnetes Vorrats- oder Reaktionsgefäss des jeweiligen Reaktorsegmentes eingeführt und nach aussen abgedichtet werden kann. Jeder Reinigungsfinger ist mit Anschlüssen für Reinigungslösung 238 (zum Entfernen von Verunreinigungen), Wasser 240 (zum Ausspülen des Gefässes) und Druckluft 242 (um Flüssigkeiten über eine Abflussleitung 244 aus den Gefässen zu befördern) versehen. Die Reinigungsstation 16ä arbeitet unsteril.

Die in der Fig. 19 dargestellte Kalibrierungsstation 16b ist dient der Kalibrierung der in das Reaktionsgefäss eintauchenden pH-Sonde (in der Fig. 3 mit Bezugszeichen 246 dargestellt). Dementsprechend wird nur das Reaktionsgefäss 12 durch einen absenkbaren Kalibrierungsfinger 248 bedient. In der Regel wird eine an sich bekannte 2-Punkte-Kalibrierung mit zwei verschiedenen Puffern vorgenommen. Der Kalibrierungsfinger 240 ist mit Anschlüssen für zwei Pufferlösungen 250, 252 (für die eigentliche Kalibrierung), Wasser 240 (zum Ausspülen des Gefässes) und Druckluft 242 (um Flüssigkeiten über eine Abflussleitung 244 aus dem Reaktionsgefäss zu befördern) versehen. Die Kalibrierungsstation 16b arbeitet unsteril.

Die in der Fig. 20 dargestellte Sterilisationsstation 16c dient der Sterilisation der einzelnen Reaktorsegmente mittels Heissdampf. Die Sterilisationsstation 16c weist fünf auf- und abfahrbare Sterilisationsfinger 254 auf, wovon ein jeder in ein zugeordnetes Vorrats- oder Reaktionsgefäss des jeweiligen Reaktorsegmentes eingeführt und nach aussen abgedichtet werden kann. Jeder Sterilisationsfinger ist mit Anschlüssen für Heissdampf 256 (für die eigentliche Sterilisation) und für sterile Druckluft 258 (um Kondensat über eine Abflussleitung 244 aus dem Reaktionsgefäss zu befördern) versehen. Die Sterilisationsstation 16c ist anfänglich unsteril, nach der Sterilisation jedoch steril.

Die in der Fig. 17 dargestellte und bereits beschriebene Befüllungsstation 16d (bzw. 16e) dient der Befüllung der an einem Reaktorsegment befindlichen Gefässe mit bis zu 9 verschiedenen Medien aus entsprechenden Vorlagen. Die Befüllungsstation 16d weist einen einzelnen auf- und abfahrbaren Befüllungsfinger in Gestalt des Röhrchenbündels 222 auf. Um jedes Gefäss des Reaktorsegmentes bedienen zu können, ist die Befüllungsstation 16d mittels einer Lineareinheit in radialer Richtung verschieb- und positionierbar. Vor Gebrauch wird die Befüllungsstation mit Heissdampf 256 sterilisiert, wobei anfallendes Kondensat über die Parkstation 230 abfliesst. Durch Zufuhr von steriler Druckluft 258 wird anschliessend ein Überdruck aufrechterhalten, um die Befüllungsstation auch während des Befüllens eines Gefässes steril zu halten. Die verschiedenen Schläuche der Befüllungsstation werden vor dem Gebrauch mit Dampf von innen und aussen sterilisiert. Die Vorlagen mit den einzelnen Medienkomponenten werden mittels einer kommerziell erhältlichen Schlauchschweissmaschine steril angeschlossen. Die Befüllungsstation 16d arbeitet steril.

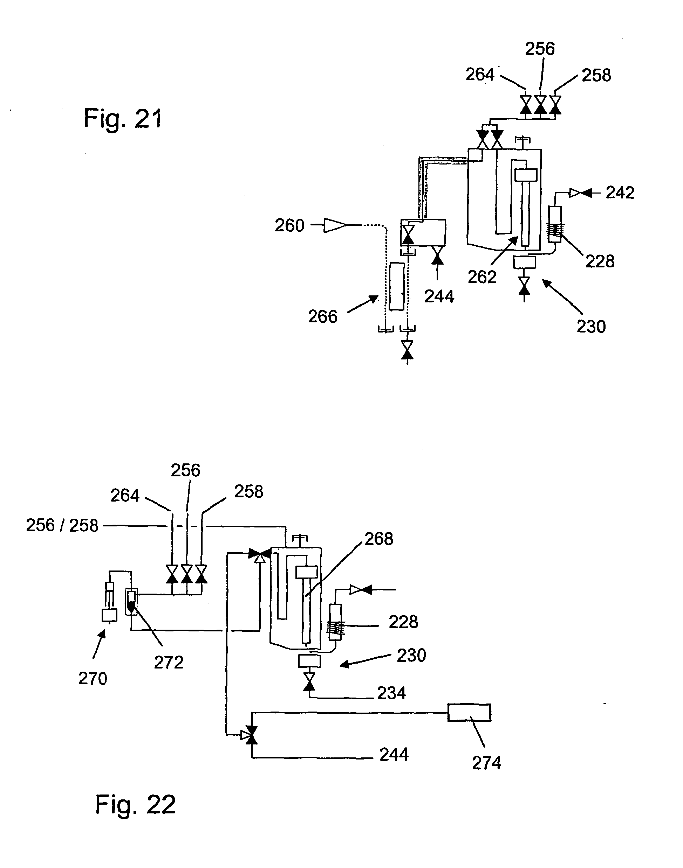

Die in der Fig. 21 dargestellte Inokulationsstation 16f dient der Zuführung einer Vorkultur 260 in das Reaktionsgefäss 12. Die Inokulationsstation 16f weist einen einzelnen auf- und abfahrbaren Inokulationsfinger 262 auf und ist wie die Befüllungsstation 16d mit einer radial betätigbaren Lineareinheit versehen, um sich über dem Reaktionsgefäss zu positionieren. Wie bei der Befüllungsstation wird zunächst über einer Parkstation 230 eine Sterilisation der Inokulationsstation vorgenommen, wobei alle Leitungen mit Heissdampf 256, sterilem Wasser 264 und steriler Luft 258 behandelt werden. Der Vorkulturbehälter wird über eine Schlauchschweissmaschine 266 steril angeschlossen.

Die in der Fig. 22 dargestellte Probenahmestation 16g (bzw. 16h) dient der Entnahme einer Probe aus dem Reaktionsgefäss 12. Die Probenahmestation 16g weist einen einzelnen auf- und abfahrbaren Entnahmefinger 268 auf und ist wie die Befüllungsstation 16d mit einer radial betätigbaren Lineareinheit versehen, um sich über dem Reaktionsgefäss zu positionieren. Wie bei der Befüllungsstation wird zunächst über einer Parkstation 230 eine Sterilisation der Probenahmestation vorgenommen, wobei alle Schläuche mit Heissdampf 256, sterilem Wasser 264 und steriler Luft 258 behandelt werden. Mit einem Spritzenmodul 270 wird die Probe über den Entnahmefinger aus dem Reaktionsgefäss 12 in eine Küvette 272 gezogen und von dort aus entweder zu einem Analysegerät 274 oder gegebenenfalls zum Abfluss 244 befördert.

Zusätzlich zu den oben beschriebenen Bestandteilen umfasst die Mehrfach-Bioreaktorvorrichtung eine Reihe von Komponenten, die insbesondere zur Steuerung und Versorgung der verschiedenen Vorrichtungsgruppen dienen. Insbesondere ist eine nicht näher dargestellte computergestützte Steuerungsvorrichtung vorhanden, welche die Vorbereitung und die Durchführung der Bioreaktorversuche steuert. Des Weiteren ist für den Betrieb der Mehrfach-Bioreaktorvorrichtung eine entsprechende Versorgung mit Strom, Flüssigkeiten und Gasen vorzusehen.

Die beschriebene Mehrfach-Bioreaktorvorrichtung erlaubt einen weitgehend automatisierten Betrieb. Im sogenannten "Single Clone" Modus werden alle 32 Reaktionsgefässe mit demselben Klon inokuliert. Es kann dann insbesondere der Effekt unterschiedlicher Reaktionsbedingungen untersucht werden. Demgegenüber werden im sogenannten "Multi Clone" Modus die einzelnen Reaktionsgefässe mit unterschiedlichen Klonen inokuliert, wobei dann beispielsweise in allen Reaktionsgefässen dieselben Reaktionsbedingungen eingestellt werden.

Der Ablauf umfasst dabei in aller Regel die folgenden Schritte:
- Reinigung (CIP) der Reaktorsegmente und der daran angeordneten Gefässe sowie sämtlicher Zuleitungen einschliesslich Ringleitung;
- Kalibrierung der pH-Sensoren mit unsterilen Pufferlösungen;
- Sterilisation (SIP) der Filter und Bearbeitungsstationen sowie der Eingänge sämtlicher Reaktorsegmente;
- Sterilisation (SIP) (in Aufeinanderfolge) der einzelnen Reaktorsegmente und der darin befindlichen Leitungen sowie der daran angeordneten Gefässe mittels der Sterilisationsstation;
- Mediumkomposition (gravimetrisch kontrolliert anhand der integrierten Wägezellen) und Befüllung der Gefässe;
- Kalibrierung der Sauerstoff-Sensoren (falls vorhanden) durch Beaufschlagen mit Stickstoffgas und mit Luft bzw. Sauerstoff;
- Inokulation;
- Durchführung der Bioreaktionen.

Jedes Reaktionsgefäss ist im Betrieb mit folgenden Grundfunktionen ausgestattet:
- Rühren;
- Temperieren;
- Belüften (submers oder "headspace") mit bis zu 3 verschiedenen Gasen, wobei die Dosierung im Leitungssystem des Reaktorsegmentes durch Anwahl eines oder mehrerer Zuleitungsgänge mit unterschiedlich grossen Restriktionen und gegebenenfalls durch eine Impuls/Pause-Modulation erfolgt;
- Zudosieren von Säure, Lauge über eine Impuls/Pause-Modulation;
- Zuführen einzelner Mediumkomponenten über eine Impuls/Pause-Modulation.

Jedes Vorratsgefäss ist im Betrieb mit folgenden grundlegenden Funktionen ausgestattet:
- periodische, gravimetrische Erfassung aller dosierter Komponenten (Säure, Lauge, Mediumkomponente, Medium, Edukt);
- Nachfüllen von verbrauchter Säure, Lauge, Mediumkomponente, verbrauchtem Medium, Edukt in die Vorratsgefässe.

### Bezugszeichenliste

- 2: Trägergestell
- 4: untere Plattform
- 6: obere Plattform
- 8: Reaktortisch
- 10, 10a, ...: Sektor von 8
- 12: Reaktionsgefäss
- 14a, 14b, ...: Vorratsgefäss
- 16a: Reinigungsstation
- 16b: Kalibrierungsstation
- 16c: Sterilisationsstation
- 16d, 16e: Befüllungsstation
- 16f: Inokulationsstation
- 16g, 16h: Probenahmestation
- 18a, 18b, ...: Sektorschicht
- 20: Ventil
- 21: Anschlussgruppe für Pneumatik
- 22: Kanal
- 23: Ventilinsel für Pneumatik
- 24, 24a: Durchgangsöffnung in 10
- 26: Anschlussflansch
- 28: Rohrstutzen
- 30: oberer Kragenflansch von 28
- 32: Absperrorgan
- 34: Durchgangskanal von 32
- 35: Temperaturmesssonde
- 36: Wägezelle
- 38: Faltenbalg
- 40: Gewichtsmessdose
- 42: Antriebsgruppe von 44
- 44: Rührvorrichtung
- 46: Rührfortsatz von 44
- 48: Rührschaufeln von 44
- 50: Statorglied von 42
- 52: Rotorglied von 42
- 54: Gehäuseteil von 42
- 56: Statorwicklung
- 58: oberes Kugellager von 52
- 60: unteres Kugellager von 52
- 62: Halterelement von 52
- 64: Permanentmagnet von 52
- 66: Aussenschale von 52
- 68: Radialbohrungen in 62
- 70a, 70b, ...: Dichtungsring
- 72: untere Flanschfläche von 32
- 74: unterer Kragenflansch von 54
- 76: Anschlüsse für 22
- 78: Ventilkörper
- 80: Kolbenglied
- 82: Druckfeder
- 84: Dachsegment von 78
- 86: Arbeitsöffnung
- 88: O-Ring von 80
- 89: Teflonring von 80
- 90: Führungsband von 80
- 91: zapfenförmiger Fortsatz
- 92: Mitnehmerstift
- 94: Folgenut
- 96: Wippglied
- 98: Drehstift
- 100: Querbalken
- 102a, 102b: Bolzenglied
- 104a, 104b: Ventilstempel
- 106: Dichtungselement
- 108: Ringwulst von 106
- 110: Membran von 106
- 112a, 112b: Haltezapfen von 106
- 114: Einfräsung für 20
- 116: Aufnahmebohrung von 18d
- 118: obere Schulter von 116
- 120: randständige Flanschfläche von 114
- 122: Führungsnut
- 124a, 124b: Ventilsitze
- 126a, 126b, 126c: vertikale Durchgangsbohrung
- 128a, 128b, 128c: horizontale Fräsung = Leitung
- 130: Zufuhrrohr für 12
- 132: Belüftungsrohr für 12
- 134: Entnahmeöffnung
- 136: Entnahmestelle von 132
- 138: Steigrohr für 14a,14b,...

- 202: Gehäuse von 16d
- 204: Mehrfachdurchführung
- 206: Einzeldurchführung
- 208: Einzeldurchführung
- 210: Dosierventil
- 212: Längsrohr für Heissdampf
- 214: Spindel
- 216: Schlitten
- 218: Schrittmotor
- 220: Abtropfröhrchen
- 222: Schlauchbündel
- 224: untere Öffnung von 202
- 226: Anschlussteile für 220
- 228: Heizgerät
- 230: Parkstation
- 232: Aufnahmebecher
- 234: Abflussleitung
- 236: Reinigungsfinger
- 238: pH-Sonde
- 240: Wasser
- 242: Druckluft
- 244: Abfluss
- 246: pH-Sonde
- 248: Kalibrierungsfinger
- 250: Puffer 1
- 252: Puffer 2
- 254: Sterilisationsfinger
- 256: Heissdampf
- 258: sterile Druckluft
- 260: Vorkultur
- 262: Inokulationsfinger
- 264: steriles Wasser
- 266: Schlauchschweissmaschine
- 268: Entnahmefinger
- 270: Spritzenmodul
- 272: Küvette
- 274: Analysegerät

## Patentansprüche

1. Mehrfach-Bioreaktorvorrichtung, mit einer Mehrzahl von Reaktionsgefässen, **dadurch gekennzeichnet, dass** sie eine Mehrzahl von Reaktorsegmenten (10, 10a, 10b) umfasst, wobei an jedem Reaktorsegment ein Reaktionsgefäss (12) sowie mindestens ein Vorratsgefäss (14a, 14b, 14c, 14d) mediumdicht hängend befestigbar ist, und dass sie eine Mehrzahl von Bearbeitungsstationen (16a, 16b, 16c, 16d, 16e, 16f, 16g, 16h) aufweist, mittels welcher vorbestimmte Bearbeitungsschritte an dem Reaktionsgefäss und/oder den Vorratsgefässen eines jeden Reaktorsegmentes durchführbar sind, wobei Bewegungsmittel vorhanden sind, um ein jedes Reaktorsegment zu einer jeden Bearbeitungsstation zu bringen oder umgekehrt, wobei ein jedes Reaktorsegment einen sterilisierbaren Bereich aufweist, der zumindest das Reaktionsgefäss (12) und einen darüber befindlichen Teil (18a, 18b, 18c) des Reaktorsegmentes umfasst.

2. Vorrichtung nach Anspruch 1, **dadurch gekennzeichnet, dass** die einzelnen Reaktorsegmente (10, 10a, 10b) sektorförmig ausgebildet sind und zusammen einen im Wesentlichen torusförmigen Reaktortisch (8) bilden.

3. Vorrichtung nach Anspruch 2, **dadurch gekennzeichnet, dass** die Bearbeitungsstationen (16a, 16b, 16c, 16d, 16e, 16f, 16g, 16h) sternartig um eine Zentralachse (A) des Reaktortisches (8) angeordnet sind, wobei Reaktorsegmente (10, 10a, 10b) und Bearbeitungsstationen (16a, 16b, 16c, 16d, 16e, 16f, 16g, 16h) durch eine Drehbewegung um die Zentralachse zueinander bringbar sind.

4. Vorrichtung nach Anspruch 1, **dadurch gekennzeichnet, dass** die Bearbeitungsstationen ausgewählt sind aus der Gruppe bestehend aus: Reinigungsstation (16a), Kalibrierungsstation (16b), Sterilisationsstation (16c), Befüllungsstation (16d, 16e), Inokulationsstation (16f) und Probenahmestation (16g, 16h).

5. Vorrichtung nach Anspruch 1, **dadurch gekennzeichnet, dass** ein jedes Reaktorsegment (10, 10a, 10b) aus mehreren übereinander angeordneten Segmentschichten (18a, 18b, 18c, 18d, 18e, 18f, 18g) gebildet ist, wobei die einzelnen Segmentschichten mit Fräsungen (128a, 128b, 128c) und/oder Bohrungen (126a, 126b, 126c) und/oder Absperrelementen (20) ausgestattet sind, welche ein Leitungssystem (22) für Flüssigkeiten und/oder Gase bilden.

6. Vorrichtung nach Anspruch 5, **dadurch gekennzeichnet, dass** eine Anzahl von unteren Segmentschichten (18a, 18b, 18c) aus rostfreiem Stahl gebildet sind und einen Teil des sterilisierbaren Bereichs bilden.

7. Vorrichtung nach Anspruch 5, **dadurch gekennzeichnet dass** das Leitungssystem eine Ringleitung für die Zuführung und Abführung von Gasen von einer zentralen Einspeisungsstelle zu den einzelnen Reaktorsegmenten (10, 10a, 10b) umfasst.

8. Vorrichtung nach Anspruch 5, **dadurch gekennzeichnet, dass** jedes Reaktorsegment (10, 10a, 10b) mit pneumatisch betätigbaren Ventilen (20) ausgestattet ist, wobei ein jedes Ventil mit mindestens einem als Ventilsitz wirkenden zugeordneten Auflagebereich (124a, 124b) einer Segmentschicht (18c) zusammenwirkt.

9. Vorrichtung nach Anspruch 8, **dadurch gekennzeichnet, dass** die Ventile (20) innerhalb des Reaktorsegmentes (10, 10a, 10b) angeordnet sind, wobei eine Anzahl von oberen Segmentschichten (18d, 18e, 18f, 18g) ein Pneumatik-Verteilsystem zur Steuerung der Ventile beinhaltet.

10. Vorrichtung nach Anspruch 8, **dadurch gekennzeichnet, dass** ein jedes Ventil (20) ein Wippglied (96) aufweist, das durch Anbringen beziehungsweise Ablassen eines pneumatischen Druckes in eine erste beziehungsweise zweite Wippstellung bringbar ist, wobei das Wippglied mit mindestens einem Stempelelement (104a, 104b) verbunden ist derart, dass in einer der beiden Wippstellungen das Stempelelement (104a bzw. 104b) mit dem zugeordneten Auflagebereich (124a bzw. 124b) einen mediumdichten Abschluss bildet, und dass in der anderen der beiden Wippstellungen das Stempelelement den mediumdichten Abschluss freigibt.

11. Vorrichtung nach Anspruch 1, **dadurch gekennzeichnet, dass** sie mit rohrartigen Wägezellen (36) ausgestattet ist, wobei eine jede Wägezelle eine mediumdichte Verbindung zwischen einem Reaktorsegment (10, 10a, 10b) und einem daran angehängten Reaktionsgefäss (12) oder Vorratsgefäss (14a, 14b, 14c, 14d) bildet.

12. Vorrichtung nach Anspruch 1, **dadurch gekennzeichnet, dass** jedes Reaktorsegment (10, 10a, 10b) mit mindestens einer sterilisierbaren Kopplungseinheit (32) ausgestattet ist, mittels welcher eine gegebenenfalls steril haltbare Verbindung zwischen einem am besagten Reaktorsegment angeordneten Reaktionsgefäss (12) oder Vorratsgefäss (14a, 14b, 14c, 14d) und einer darüber angeordneten Bearbeitungsstation (16a, 16b, 16c, 16d, 16e, 16f, 16g, 16h) herstellbar ist.

13. Vorrichtung nach Anspruch 12, **dadurch gekennzeichnet, dass** die Kopplungseinheit ein Kugelventil (32) beinhaltet, welches in Freigabestellung einen im Wesentlichen vertikalen Durchgangskanal (34) freigibt.

14. Vorrichtung nach Anspruch 1, **dadurch gekennzeichnet, dass** sie für jedes Reaktionsgefäss (12) eine zugeordnete Rührvorrichtung (44) aufweist.

15. Vorrichtung nach Anspruch 14, **dadurch gekennzeichnet, dass** die Rührvorrichtung (44) ein hängend gelagertes, im Inneren des Reaktionsgefässes (12) angeordnetes Rotorglied (52) mit daran angeordnetem Rührfortsatz (46) sowie ein ausserhalb des Reaktionsgefässes befindliches, toroidales Statorglied (50) aufweist, wobei Rotorglied und Rührfortsatz eine mittige axiale Öffnung aufweisen.

## Claims

1. A multiple bio-reactor device comprising a plurality of reaction vessels, **characterized in** comprising a plurality of reactor segments (10, 10a, 10b), wherein a reaction vessel (12) and at least one supply vessel (14a, 14b, 14c, 14d) can be secured to each reactor segment in a medium-tight suspended manner, and further comprising a plurality of processing stations (16a, 16b, 16c, 16d, 16e, 16f, 16g, 16h) for carrying out predetermined processing steps with respect to the reaction vessel and/or the supply vessels of each reactor segment, wherein actuator means are provided for bringing each reactor segment to a respective processing station or vice-versa, each reactor segment comprising a sterilizable domain which encompasses at least the reaction vessel (12) and part of the reaction segment located thereabove (18a, 18b, 18c).

2. The device of claim 1, **characterized in that** the individual reactor segments (10, 10a, 10b) are sector-shaped and together form a substantially toroidal reactor table (8).

3. The device of claim 2, **characterized in that** the processing stations (16a, 16b, 16c, 16d, 16e, 16f, 16g, 16h) are arranged star-like around a central axis (A) of the reactor table (8), wherein reactor segments (10, 10a, 10b) and processing stations (16a, 16b, 16c, 16d, 16e, 16f, 16g, 16h) can be brought to each other by a rotation about the central axis.

4. The device of claim 1, **characterized in that** the processing stations are selected from the group consisting of: cleaning station (16a), calibration station (16b), sterilization station (16c), filling station (16d, 16e), inoculation station (16f) and sampling station (16g, 16h).

5. The device of claim 1, **characterized in that** each reactor segment (10, 10a, 10b) is formed of several segment layers (18a, 18b, 18c, 18d, 18e, 18f, 18g) stacked on top of each other, wherein the individual segment layers are provided with milled grooves (128a, 128b, 128c) and/or boreholes (126a, 126b, 126c) and/or isolation elements (20) that form a channel system (22) for liquids and/or gases.

6. The device of claim 5, **characterized in that** a number of lower segment layers (18a, 18b, 18c) are made of stainless steel and form part of the sterilizable domain.

7. The device of claim 5, **characterized in that** the channel system comprises a ring line for supplying and draining gases from a central injection point to the individual reactor segments (10, 10a, 10b).

8. The device of claim 5, **characterized in that** each reactor segment (10, 10a, 10b) is provided with pneumatically operated valves (20), each valve cooperating with at least one corresponding contact portion (124a, 124b) acting as a valve seat of a segment layer (18c).

9. The device of claim 8, **characterized in that** the valves (20) are arranged within the reaction segment (10, 10a, 10b), wherein a number of upper segment layers (18d, 18e, 18f, 18g) houses a pneumatics distribution system for controlling the valves.

10. The device of claim 8, **characterized in that** each valve (20) comprises a rocking member (96) that can be brought into a first and a second rocking position, respectively, by applying and releasing a pneumatic pressure, respectively, wherein the rocking member is connected to at least one plunger element (104a, 104b) in such a way that the plunger element (1 04a or 104b) in one of the two rocking positions forms a medium-tight closure with the corresponding contact portion (124a or 124b) and that the plunger element in the other one of the two rocking positions releases the medium-tight closure.

11. The device of claim 1, **characterized in that** it is provided with tubelike load cells (36), wherein each load cell forms a medium-tight connection between a reactor segment (10, 10a, 10b) and a reaction vessel (12) or supply vessel (14a, 14b, 14c, 14d) secured thereto.

12. The device of claim 1, **characterized in that** each reactor segment (10, 10a, 10b) is provided with at least one sterilizable coupling unit (32) in order to form a connection between a reaction vessel (12) or supply vessel (14a, 14b, 14c, 14d) arranged at said reactor segment and a processing station (16a, 16b, 16c, 16d, 16e, 16f, 16g, 16h) arranged thereabove, wherein said connection optionally can be maintained sterile.

13. The device of claim 12, **characterized in that** the coupling unit comprises a ball valve (32) that in its open position clears a substantially vertical passing channel (34).

14. The device of claim 1, **characterized in** comprising a respective stirring device (44) for each reaction vessel (12).

15. The device of claim 14, **characterized in that** the stirring device (44) comprises a hangingly supported rotor member (52) provided with a stirring appendage (46) arranged inside of the reaction vessel (12) and also a toroidal stator member (50) arranged outside of the reaction vessel, wherein rotor member and stirring appendage have a central axial opening.

## Revendications

1. Dispositif de bioréacteurs multiples, comprenant une pluralité de récipients de réaction,
**caractérisé en ce qu'**
il comprend une pluralité de segments de réacteur (10, 10a, 10b), un récipient de réaction (12) ainsi qu'au moins un récipient de réserve (14a, 14b, 14c, 14d) pouvant être fixés de façon suspendue et étanche aux fluides à chaque segment de réacteur, et il présente une pluralité de stations de traitement (16a, 16b, 16c, 16d, 16e, 16f, 16g, 16h) au moyen desquelles des étapes de traitement prédéterminés peuvent être réalisées au niveau du récipient de réaction et/ou des récipients de réserve de chaque segment de réacteur, des moyens de déplacement étant présents pour amener chaque segment de réacteur jusqu'à chaque station de traitement ou inversement, chaque segment de réacteur présentant une zone stérilisable qui comprend au moins le récipient de réaction (12) et une partie (18a, 18b, 18c) du segment de réacteur située au-dessus.

2. Dispositif selon la revendication 1,
**caractérisé en ce que**
les segments de réacteur individuels (10, 10a, 10b) sont en forme de secteurs et forment conjointement une table de réacteur (8) pour l'essentiel toroïdale.

3. Dispositif selon la revendication 2,
**caractérisé en ce que**
les stations de traitement (16a, 16b, 16c, 16d, 16e, 16f, 16g, 16h) sont disposées en étoile autour d'un axe central (A) de la table de réacteur (8), des segments de réacteur (10, 10a, 10b) et des stations de traitement (16a, 16b, 16d, 16e, 16f, 16g, 16h) pouvant être amenés les uns vers les autres par un mouvement de rotation autour de l'axe central.

4. Dispositif selon la revendication 1,
**caractérisé en ce que**
les stations de traitement sont choisies parmi le groupe comprenant : une station de nettoyage (16a), une station de calibrage (16b), une station de stérilisation (16c), une station de remplissage (16d, 16e), une station d'inoculation (16f) et une station de prélèvement d'échantillons (16g, 16h).

5. Dispositif selon la revendication 1,
**caractérisé en ce que**
chaque segment de réacteur (10, 10a, 10b) est formé de plusieurs couches de segment (18a, 18b, 18c, 18d, 18e, 18f, 18g) disposées les unes sur les autres, les couches de segment individuelles étant pourvues de fraisages (128a, 128b, 128c) et/ou de perçages (126a, 126b, 126c) et/ou d'éléments d'arrêt (20) qui forment un Dispositif de conduites (22) pour des liquides et/ou des gaz.

6. Dispositif selon la revendication 5
**caractérisé en ce qu'**
un certain nombre de couches de segment inférieures (18a, 18b, 18c) sont en acier inoxydable et forment une partie de la zone stérilisable.

7. Dispositif selon la revendication 5,
**caractérisé en ce que**
le Dispositif de conduites comprend une conduite annulaire pour l'acheminement et l'évacuation de gaz depuis un point d'alimentation central vers les segments de réacteur individuels (10, 10a, 10b).

8. Dispositif selon la revendication 5,
**caractérisé en ce que**
chaque segment de réacteur (10, 10a, 10b) est équipé de soupapes à actionnement pneumatique (20), chaque soupape coopérant avec au moins une zone d'appui associée (124a, 124b) d'une couche de segment (18c) agissant en tant que siège de soupape.

9. Dispositif selon la revendication 8,
**caractérisé en ce que**
les soupapes (20) sont disposées à l'intérieur du segment de réacteur (10, 10a, 10b), un certain nombre de couches de segment supérieures (18d, 18e, 18f, 18g) contenant un Dispositif de distribution pneumatique pour la commande des soupapes.

10. Dispositif selon la revendication 8,
**caractérisé en ce que**
chaque soupape (20) présente un élément à bascule (96) qui, par l'apport ou l'évacuation d'une pression pneumatique, peut être amené dans une première ou une deuxième position de basculement, l'élément à bascule étant relié à au moins un élément de poussoir (104a, 104b) de telle sorte que dans l'une des deux positions de basculement, l'élément de poussoir (104a ou 104b) forme avec la zone d'appui associée (124a ou 124b) une fermeture étanche aux fluides, et dans l'autre des deux positions de basculement, l'élément de poussoir libère la fermeture étanche aux fluides.

11. Dispositif selon la revendication 1,
**caractérisé en ce qu'**
il est pourvu de cellules de pesée (36), chaque cellule de pesée formant une liaison étanche aux fluides entre un segment de réacteur (10, 10a, 10b) et un récipient de réaction (12) ou un récipient de réserve (14a, 14b, 14c, 14d) suspendu à celui-ci.

12. Dispositif selon la revendication 1,
**caractérisé en ce que**
chaque segment de réacteur (10, 10a, 10b) est pourvu d'au moins une unité de couplage stérilisable (32) qui permet d'établir une liaison stérile durable le cas échéant entre un récipient de réaction (12) ou récipient de réserve (14a, 14b, 14c, 14d) disposé au niveau du segment de réacteur et une station de traitement (16a, 16b, 16c, 16d, 16e, 16f, 16g, 16h) disposée au-dessus.

13. Dispositif selon la revendication 12,
**caractérisé en ce que**
l'unité de couplage contient une soupape à bille (32) qui, en position de libération, libère un canal de passage (34) pour l'essentiel vertical.

14. Dispositif selon la revendication 1,
**caractérisé en ce qu'**
il présente pour chaque récipient de réaction (12) un dispositif de mélange associé (44).

15. Dispositif selon la revendication 14,
**caractérisé en ce que**
le dispositif de mélange (44) présente un élément de rotor (52) logé de façon suspendue et disposé à l'intérieur du récipient de réaction (12) avec un bec mélangeur (46) disposé au niveau de celui-ci, il présente aussi un élément de stator toroïdal (50) disposé à l'extérieur du récipient de réaction, l'élément de rotor et le bec mélangeur ayant une ouverture axiale centrale.
